# EUROPEAN PATENT APPLICATION

(11) **EP 4 050 849 A1**
(43) Date of publication of application: **31.08.2022**
(21) Application number: 20892274.0
(22) Date of filing: 23.09.2020
(51) Int. Cl.: H04L 12/24

(54) **DATA PROCESSING METHOD, APPARATUS, AND SYSTEM**

(30) Priority: 29.11.2019 CN 201911204433
(71) Applicant: Huawei Technologies Co., Ltd., Shenzhen, Guangdong 518129 (CN)
(72) Inventor: WANG, Zitao, Shenzhen, Guangdong 518129 (CN); ZHENG, Guangying, Shenzhen, Guangdong 518129 (CN); WU, Qin, Shenzhen, Guangdong 518129 (CN); NIU, Ye, Shenzhen, Guangdong 518129 (CN)
(74) Representative: MERH-IP Matias Erny Reichl Hoffmann Patentanwälte PartG mbB
(86) International application number: PCT/CN2020/117247
(87) International publication number: WO 2021/103791

(57) **Abstract**

This application discloses a data processing method, apparatus, and system, and belongs to the communications field. The method includes: A management device generates a request message, where the request message includes a quantity of list entries, identification information, and an offset. The management device sends the request message to a network device, where the request message is used to request, from the network device, a list entry that is in a list identified by the identification information, that uses the offset as a start location, and that is indicated by the quantity of list entries, and a total quantity of list entries included in the list is greater than the quantity of list entries. The management device receives a response message that is corresponding to the request message and that is sent by the network device, where the response message includes a list entry requested by the request message. This application can prevent the management device from crashing.

## Description

This application claims priority to Chinese Patent Application No. 201911204433.8, filed on November 29, 2019 and entitled "DATA PROCESSING METHOD, APPARATUS, AND SYSTEM", which is incorporated herein by reference in its entirety.

### TECHNICAL FIELD

This application relates to the communications field, and in particular, to a data processing method, apparatus, and system.

### BACKGROUND

A Restconf protocol or a network configuration protocol (network configuration protocol, Netconf) defines a set of management operations of a network device, and the network device may be a server, a switch, a router, or the like. The network device stores at least one list, and each list stores at least one list entry. A user can use the set of management operations to obtain a list entry in a required list from the network device.

For example, when the user needs to obtain a list entry in a list from the network device, the user may enter identification information of the list into a management device, where the list includes the list entry that the user needs to obtain. The management device sends a request message to the network device, where the request message includes the identification information. The network device receives the request message, obtains the list entry from the list corresponding to the identification information, and sends the obtained list entry to the management device. The management device receives the list entry sent by the network device.

In a process of implementing this application, the inventor finds that the conventional technology has at least the following disadvantages:

The network device may obtain a large quantity of list entries. Therefore, the management device receives a large quantity of list entries at a time, which consumes a large amount of memory of the management device, and easily causes the management device to crash.

### SUMMARY

This application provides a data processing method, apparatus, and system, to prevent a management device from crashing. The technical solutions are as follows.

According to a first aspect, this application provides a data processing method. In the method, a management device generates a request message, where the request message includes a quantity of list entries, identification information, and an offset, the quantity of list entries is used to indicate a quantity of list entries requested by the management device from a network device, the identification information is used to indicate a to-be-requested list in the network device, the to-be-requested list includes a list entry indicated by the quantity of list entries, and a value of the offset is equal to a product of a quantity of request messages that have been sent to the network device and that are used to request a list entry in the to-be-requested list and the quantity of list entries. The management device sends the request message to the network device, where the request message is used to request, from the network device, a list entry that is in the to-be-requested list identified by the identification information, that uses the offset as a start location, and that is indicated by the quantity of list entries, and a total quantity of list entries included in the to-be-requested list is greater than the quantity of list entries. The management device receives a response message that is corresponding to the request message and that is sent by the network device, where the response message includes the list entry requested by the request message.

Because the request message includes the quantity of list entries and the offset, the network device may obtain the list entry that is in the to-be-requested list, that uses the offset as the start location, and that is indicated by the quantity of list entries. In this way, a quantity of list entries received by the management device is less than or equal to the quantity of list entries. This prevents the management device from receiving a large quantity of list entries at a time and then crashing.

In a possible implementation, the management device obtains the total quantity of list entries, and determines a total quantity of request times based on the total quantity of list entries and the quantity of list entries, where the total quantity of request times is used to indicate a quantity of request messages sent by the management device to the network device. The management device generates a request message when a quantity of request messages that have been sent to the network device and that are used to request a list entry in the to-be-requested list does not reach the total quantity of request times.

If the management device does not determine the total quantity of request times, the management device continuously sends request messages to the network device. Only when receiving a response message that is corresponding to a request message and that does not include any list entry, the management device finds that all list entries in the to-be-requested list have been obtained from the network device. In this case, no list entry is obtained by using a request message that is sent by the management device last time, and the request message sent by the management device last time and a response message received by the management device last time cause a waste of network resources. However, in this implementation, the management device determines the total quantity of request times. Therefore, when the quantity of request messages that have been sent to the network device and that are used to request the list entry in the to-be-requested list reaches the total quantity of request times, it indicates that all the list entries in the to-be-requested list have been obtained from the network device. The management device can be prevented from sending the request message that is sent last time and receiving the response message that is received last time, thereby saving network resources.

In another possible implementation, the management device sends a total quantity request message to the network device, where the total quantity request message includes the identification information, and the total quantity request message is used to request the network device to obtain the total quantity of list entries. The management device receives a total quantity response message sent by the network device, where the total quantity response message includes the total quantity of list entries. In this way, the management device can obtain the total quantity of list entries, determine the total quantity of request times based on the total quantity of list entries, and determine in time, based on the total quantity of request times, whether all the list entries in the to-be-requested list have been obtained. Therefore, the management device is prevented from sending a request message once after all the list entries in the to-be-requested list have been obtained, thereby saving network resources.

In another possible implementation, the management device receives a total quantity update message sent by the network device, where the total quantity update message includes an updated total quantity of list entries, and the updated total quantity of list entries is a total quantity of list entries determined by the network device based on a change of the total quantity of list entries. The management device updates a value of the total quantity of request times based on the updated total quantity of list entries. In this way, the management device can accurately determine, based on the updated total quantity of request times, when all the list entries have been obtained from the to-be-requested list.

In another possible implementation, the request message is a request message based on a network configuration protocol Netconf or a request message based on a Restconf protocol.

According to a second aspect, this application provides a data processing method. In the method, a network device receives a request message sent by a management device, where the request message includes a quantity of list entries, identification information, and an offset, the quantity of list entries is used to indicate a quantity of list entries requested by the management device from the network device, the identification information is used to indicate a to-be-requested list in the network device, the to-be-requested list includes a list entry indicated by the quantity of list entries, and a value of the offset is equal to a product of a quantity of request messages that have been sent to the network device and that are used to request a list entry in the to-be-requested list and the quantity of list entries. The network device obtains a list entry that is in the list identified by the identification information, that uses the offset as a start location, and that is indicated by the quantity of list entries, where a total quantity of list entries included in the list is greater than the quantity of list entries. The network device sends a response message corresponding to the request message to the management device, where the response message includes the list entry.

Because the request message includes the quantity of list entries and the offset, the network device obtains the list entry that is in the to-be-requested list, that uses the offset as the start location, and that is indicated by the quantity of list entries. In this way, a quantity of list entries to be sent to the management device can be reduced. This prevents the management device from receiving a large quantity of list entries at a time and then crashing.

In a possible implementation, the network device receives a total quantity request message sent by the management device, where the total quantity request message includes the identification information. The network device obtains the total quantity of list entries included in the list identified by the identification information. The network device sends a total quantity response message to the management device, where the total quantity response message includes the total quantity of list entries, the total quantity response message is used by the management device to determine a total quantity of request times based on the total quantity of list entries, and the total quantity of request times is used to indicate a quantity of request messages sent by the management device to the network device. In this way, the total quantity of list entries included in the to-be-requested list may be sent to the management device, so that the management device can determine the total quantity of request times based on the total quantity of list entries, and determine in time, based on the total quantity of request times, whether all list entries in the to-be-requested list have been obtained. Therefore, the management device is prevented from sending a request message once after all the list entries in the to-be-requested list have been obtained, thereby saving network resources.

In another possible implementation, the network device determines an updated total quantity of list entries when the total quantity of list entries changes, and sends a total quantity update message to the management device, where the total quantity update message includes the updated total quantity of list entries, and the total quantity update message is used by the management device to update a value of the total quantity of request times based on the updated total quantity of list entries. In this way, the management device updates the total quantity of request times based on the updated total quantity of list entries, and can accurately determine, based on the updated total quantity of request times, when all the list entries have been obtained from the to-be-requested list.

According to a third aspect, this application provides a data processing apparatus, configured to perform the method in the first aspect or any possible implementation of the first aspect. Specifically, the apparatus includes units configured to perform the method in the first aspect or any possible implementation of the first aspect.

According to a fourth aspect, this application provides a data processing apparatus, configured to perform the method in the second aspect or any possible implementation of the second aspect. Specifically, the apparatus includes units configured to perform the method in the second aspect or any possible implementation of the second aspect.

According to a fifth aspect, this application provides a data processing apparatus, where the apparatus includes a processor, a memory, and a transceiver. The processor, the memory, and the transceiver may be connected through a bus system. The memory is configured to store one or more programs, and the processor is configured to execute the one or more programs in the memory, to complete the method in the first aspect or any possible implementation of the first aspect.

According to a sixth aspect, this application provides a data processing apparatus, where the apparatus includes a processor, a memory, and a transceiver. The processor, the memory, and the transceiver may be connected through a bus system. The memory is configured to store one or more programs, and the processor is configured to execute the one or more programs in the memory, to complete the method in the second aspect or any possible implementation of the second aspect.

According to a seventh aspect, this application provides a computer-readable storage medium. The computer-readable storage medium stores program code. When the program code is run on a computer, the computer is enabled to perform the method in any one of the first aspect, the second aspect, the possible implementations of the first aspect, or the possible implementations of the second aspect.

According to an eighth aspect, this application provides a computer program product including program code. When the computer program product runs on a computer, the computer is enabled to perform the method in any one of the first aspect, the second aspect, the possible implementations of the first aspect, or the possible implementations of the second aspect.

According to a ninth aspect, this application provides a data processing system, including the apparatus according to the third aspect and the apparatus according to the fourth aspect, or the apparatus according to the fifth aspect and the apparatus according to the sixth aspect.

### BRIEF DESCRIPTION OF DRAWINGS

FIG. 1 is a schematic diagram of a system architecture according to an embodiment of this application;
FIG. 2 is a flowchart of a data processing method according to an embodiment of this application;
FIG. 3A and FIG. 3B are a flowchart of another data processing method according to an embodiment of this application;
FIG. 4A and FIG. 4B are a flowchart of another data processing method according to an embodiment of this application;
FIG. 5A and FIG. 5B are a flowchart of another data processing method according to an embodiment of this application;
FIG. 6 is a schematic diagram of a structure of a data processing apparatus according to an embodiment of this application;
FIG. 7 is a schematic diagram of a structure of another data processing apparatus according to an embodiment of this application;
FIG. 8 is a schematic diagram of a structure of another data processing apparatus according to an embodiment of this application; and
FIG. 9 is a schematic diagram of a structure of another data processing apparatus according to an embodiment of this application.

### DESCRIPTION OF EMBODIMENTS

The following further describes in detail embodiments of this application with reference to accompanying drawings.

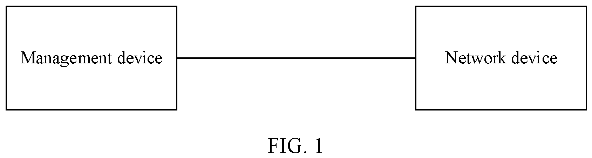

Refer to FIG. 1. An embodiment of this application provides a data processing system. The system includes a network device and a management device.

The network device may be a device such as a router, a switch, or a server. The network device includes at least one list (list), each list is used to store at least one list entry (list entry), and each list entry includes at least one parameter.

For example, it is assumed that the network device is a server, and it is assumed that the network device includes a song list "album" used to store song information, a storage path of the song list "album" in the network device is "jukebox/library/artist/album", each list entry included in the song list "album" may be song information, and the song information may include parameters such as a song name, release time, or a singer.

For another example, it is assumed that the network device is a router or a switch, and a list entry included in the list in the network device may be routing information, configuration information, or the like.

The management device may establish a network connection to the network device, and obtain all or some list entries in a list from the network device through the network connection.

Optionally, when a user needs to request a list entry included in a list, for ease of description, the list is referred to as a to-be-requested list, and the user may enter identification information of the to-be-requested list in the management device. The management device obtains the identification information of the to-be-requested list, establishes a network connection to the network device, generates a request message including the identification information, and sends the request message to the network device through the network connection. The network device receives the request message, obtains a list entry included in the to-be-requested list corresponding to the identification information, and sends a response message to the management device. The response message includes the obtained list entry.

Optionally, the identification information of the to-be-requested list may be a storage path of the to-be-requested list in the network device, or the like.

For example, assuming that the user needs a list entry in the song list "album", the user may enter identification information "jukebox/library/artist/album" of the song list "album" in the management device. The management device establishes a network connection to the network device, and sends a request message to the network device, where the request message includes the identification information "jukebox/library/artist/album" of the song list "album". The network device obtains a list entry from the song list "album" corresponding to the identification information "jukebox/library/artist/album", and sends a response message including the obtained list entry to the management device.

Optionally, the request message and the response message transmitted between the management device and the network device may be messages based on a network configuration protocol (network configuration protocol, Netconf) or messages based on a Restconf protocol. The network connection established between the management device and the network device may be a Netconf connection or a Restconf connection.

It should be noted that a list may store a relatively large quantity of list entries. In this case, when the management device obtains a list entry in the to-be-requested list from the network device through the Netconf protocol or the Restconf protocol, the network device sends a large quantity of list entries in the to-be-requested list to the management device. The management device receives a large quantity of list entries, which consumes a large amount of memory of the management device, and easily causes the management device to crash. To resolve the technical problem, a capability set for obtaining data by page may be defined in the network device. The capability set supports a manner of obtaining data by page. The manner of obtaining data by page means that the management device is allowed to obtain list entries in a list from the network device in a plurality of times. In this way, the management device does not obtain many list entries each time, so as not to consume a large amount of memory space, thereby preventing the management device from crashing.

When the management device communicates with the network device based on the Netconf protocol, a capability set for obtaining data by page is configured in the network device based on the Netconf protocol. The capability set for obtaining data by page configured based on the Netconf protocol may be represented as:
Netconf paging capability: urn:ietf:params:netconf:capability:paging:1.0.

When the management device communicates with the network device based on the Restconf protocol, a capability set for obtaining data by page is configured in the network device based on the Restconf protocol. The capability set for obtaining data by page configured based on the Restconf protocol may be represented as:
Restconf paging capability: urn:ietf:params:restconf:capability:paging:1.0.

In this way, when the management device needs to obtain the list entry in the to-be-requested list from the network device, the management device establishes a network connection to the network device, and obtains a capability set supported by the network device. When the capability set supported by the network device includes a capability set for obtaining data by page, the management device obtains the list entry in the to-be-requested list from the network device in the manner of obtaining data by page. In other words, the management device obtains list entries in the to-be-requested list from the network device in a plurality of times. When obtaining the list entry each time, the management device generates a request message, where the request message includes a quantity of list entries, identification information, and an offset, the identification information is identification information of the to-be-requested list, and a value of the offset is equal to a product of a quantity of request messages that have been sent to the network device and that are used to request the list entry in the to-be-requested list and the quantity of list entries; and sends the request message to the network device.

The network device receives the request message, obtains, from the list corresponding to the identification information by using the offset as a start location, a list entry indicated by a target quantity of list entries, and sends a response message corresponding to the request message to the management device, where the response message includes the obtained list entry.

Because the management device obtains each time only the list entry indicated by the quantity of list entries, it can be ensured that when the management device receives the response message, a large amount of memory of the management device is not consumed, thereby preventing the management device from crashing.

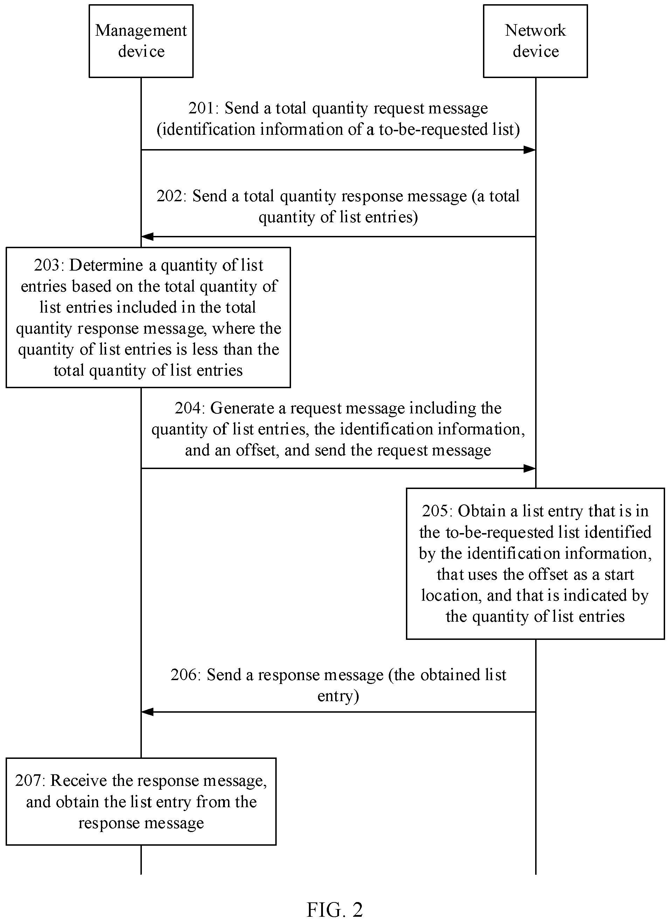

Next, in the embodiment shown in FIG. 2, a process that the management device obtains the list entries included in the to-be-requested list from the network device in a plurality of times is described in detail.

Refer to FIG. 2. An embodiment of this application provides a data processing method. The method is applied to the network architecture shown in FIG. 1. The method includes the following steps.

Step 201: A management device sends a total quantity request message to a network device, where the total quantity request message includes identification information of a to-be-requested list.

The total quantity request message may further include total quantity acquisition indication information.

In this step, the management device obtains the identification information of the to-be-requested list, and generates the total quantity request message including the total quantity acquisition indication information and the identification information of the to-be-requested list, where the total quantity acquisition indication information is used to indicate the network device to obtain a total quantity of list entries included in the to-be-requested list.

Optionally, the management device obtains the identification information of the to-be-requested list entered by a user.

The management device may display a first input interface to the user, and the user may enter the identification information of the to-be-requested list in the first input interface. The management device reads the identification information of the to-be-requested list from the first input interface, generates the total quantity request message including the total quantity acquisition indication information and the identification information, establishes a network connection to the network device, and sends the total quantity request message to the network device through the network connection.

Optionally, the management device further obtains a first parameter type and a retrieval condition, and the generated total quantity request message may further include the first parameter type and the retrieval condition.

Optionally, when the user needs a list entry, in the to-be-requested list, whose first parameter meets the retrieval condition, the user may further enter, in the first input interface, a first parameter type and a retrieval condition that are corresponding to the first parameter. The management device further reads the first parameter type and the retrieval condition from the first input interface. Correspondingly, the generated total quantity request message may further include the first parameter type and the retrieval condition. The total quantity request message is used to request the network device to obtain, from the to-be-requested list, a total quantity of list entries whose first parameter meets the retrieval condition.

Optionally, when the user needs list entries in the entire to-be-requested list, the user may not enter the first parameter type and the retrieval condition in the management device. In this case, the total quantity request message generated by the management device does not include the first parameter type and the retrieval condition.

Optionally, before performing this step, the management device may first obtain the first parameter type and the retrieval condition, and send a query request to the network device, where the query request includes the first parameter type and the retrieval condition. The network device receives the query request, queries, based on the first parameter type, each list that includes a list entry whose first parameter meets the retrieval condition, and sends identification information of each list obtained to the management device. The management device receives the identification information of each list, selects the identification information of a list, and then generates a total quantity request message including the selected identification information of the list, the first parameter type, and the retrieval condition.

For example, assuming that the user needs to obtain a list entry from a song list "album", the identification information entered by the user in the first input interface displayed by the management device is "jukebox/library/artist/album", the first parameter type entered is "release time", and the retrieval condition entered is "release time is later than year 1990". The management device reads the identification information "jukebox/library/artist/album", the first parameter type "release time", and the retrieval condition "release time is later than year 1990" from the first input interface, generates a total quantity request message including the total quantity acquisition indication information, the identification information "jukebox/library/artist/album", the first parameter type "release time", and the retrieval condition "release time is later than year 1990", and sends the total quantity request message to the network device.

Optionally, the total quantity request message includes an indication element and a condition element, the indication element is used to include the total quantity acquisition indication information, and the condition element includes the identification information. When the total quantity request message further includes the first parameter type and the retrieval condition, the condition element further includes the first parameter type and the retrieval condition.

In the total quantity request message, the management device defines an element by using a start label and an end label, where the start label and the end label include a type of the element. For example, the indication element may be represented as <return-count>true</return-count>, where "return-count" represents a type of the indication element. In other words, "return-count" is used to represent the indication element. "<return-count>" is a start label of the indication element, "</return-count>" is an end label of the indication element, and setting content of the indication element to true indicates that the indication element includes total quantity acquisition indication information.

For another example, the condition element may be represented as <where>/jukebox/library/artist/album[year>1990] </where>, where "where" represents a type of the condition element. In other words, "where" is used to represent the condition element. "year" represents a first parameter type "release time", "year>1990" represents a retrieval condition "release time is later than year 1990", "<where>" is a start label of the condition element, and "</where>" is an end label of the condition element. Therefore, the condition element includes the identification information "jukebox/library/artist/album", the first parameter type "release time", and the retrieval condition "release time is later than year 1990".

Therefore, the total quantity request message may be represented as:
<return-count>true</return-count>
<where>/jukebox/library/artist/album[year> 1990] </where>.

Optionally, the total quantity request message may be a remote procedure call (remote procedure call, RPC) message based on the Netconf protocol, an RPC message based on the Restconf protocol, or a hypertext transfer protocol (hypertext transfer protocol, http) message based on the Restconf protocol.

Step 202: The network device receives the total quantity request message, obtains, based on the total quantity request message, the total quantity of list entries included in the to-be-requested list, and sends a total quantity response message to the management device, where the total quantity response message includes the total quantity of list entries.

In this step, the total quantity request message includes the total quantity acquisition indication information and the identification information of the to-be-requested list. The network device obtains, based on an indication of the total quantity acquisition indication information, the total quantity of list entries included in the to-be-requested list from the to-be-requested list corresponding to the identification information.

When the total quantity request message further includes the first parameter type and the retrieval condition, the network device obtains, from the to-be-requested list corresponding to the identification information, a total quantity of list entries whose first parameter corresponding to the first parameter type meets the retrieval condition.

Optionally, in this step, the network device receives the total quantity request message, parses the indication element included in the total quantity request message, to obtain the total quantity acquisition indication information, and parses the condition element included in the total quantity request message, to obtain the identification information of the to-be-requested list.

Optionally, when the condition element further includes the first parameter type and the retrieval condition, the first parameter type and the retrieval condition are further obtained when the condition element is parsed.

For example, the total quantity request message received by the network device may be represented as follows:
<return-count>true</return-count>
<where>/jukebox/library/artist/album[year> 1990] </where>.

The total quantity request message includes an indication element <return-count>true</return-count> and a condition element <where>/jukebox/library/artist/album[year>1990] </where>.

When parsing the indication element, the network device determines, based on that content included in the indication element is "true", that the total quantity request message includes the total quantity acquisition indication information. When parsing the condition element, the network device obtains that the identification information of the to-be-requested list "album" is "jukebox/library/artist/album", the first parameter type is "release time", and the retrieval condition is "release time is later than year 1990". Based on the indication of the total quantity acquisition indication information, a total quantity of list entries whose release time is later than year 1990 is obtained from the to-be-requested list "album" corresponding to the identification information "jukebox/library/artist/album". It is assumed that the obtained total quantity of list entries is 60.

Optionally, the total quantity response message includes a total quantity element, and the total quantity element includes the total quantity of list entries. For example, the indication element may be represented as < count>60</return-count>, where "count" represents a type of the total quantity element. In other words, "count" is used to represent the total quantity element. "<count>" is a start label of the total quantity element, and "</count>" is an end label of the total quantity element.

Step 203: The management device receives the total quantity response message, and determines a quantity of list entries based on the total quantity of list entries included in the total quantity response message, where the quantity of list entries is less than the total quantity of list entries.

In this step, the management device displays the total quantity of list entries and obtains the quantity of list entries entered by the user based on the total quantity of list entries. Alternatively, the management device determines the quantity of list entries based on the total quantity of list entries and a preset threshold, where the determined quantity of list entries is less than or equal to the preset threshold.

For example, the management device may display a second input interface, where the second input interface includes a total quantity of list entries 60, so that the user may enter a quantity of list entries 20 in the second input interface based on the total quantity of list entries 60, and the management device obtains the quantity of list entries 20 from the second input interface. Alternatively, assuming that the preset threshold is 21 and the total quantity of list entries is 60, the quantity of list entries determined by the management device may be 20.

Optionally, the management device calculates the total quantity of request times based on the total quantity of list entries and the quantity of list entries. For example, the management device calculates, based on the total quantity of list entries 60 and the quantity of list entries 20, that the total quantity of request times is 3. In other words, the management device needs to obtain the list entries included in the to-be-requested list from the network device in three times.

Optionally, the management device further stores the total quantity of list entries.

Optionally, the operations in steps 201 to 203 are optional operations. In other words, the management device does not need to obtain the total quantity of list entries from the network device. In this way, the management device may directly set the quantity of list entries or directly receive the quantity of list entries entered by the user. In this case, the management device cannot determine the total quantity of request times.

Step 204: The management device generates a request message, where the request message includes the quantity of list entries, the identification information, and an offset, and sends the request message to the network device.

In this step, the management device calculates the offset based on a quantity of request messages that have been sent to the network device and that are used to request the list entry in the to-be-requested list and the quantity of list entries.

If the management device generates the request message for the first time, a quantity of request messages is 0, and the offset calculated based on the quantity of request messages and the quantity of list entries is 0. If the management device generates the request message for an m^{th} time, the quantity of request messages is m-1, and the offset calculated based on the quantity of request messages and the quantity of list entries is (m-1)^{∗}L, where L is the quantity of list entries, m is an integer greater than 1, and ^{∗} is a multiplication operation.

Optionally, the request message generated by the management device may further include the first parameter type and the retrieval condition.

Optionally, the management device may further obtain a second parameter type and a sorting manner. Correspondingly, the request message generated by the management device may further include the second parameter type and the sorting manner.

Optionally, after the management device displays the second input interface, the user may enter the second parameter type and the sorting manner in the second input interface. In this way, the management device may read the second parameter type and the sorting manner from the second input interface.

Optionally, the second parameter type is the same as or different from the first parameter type.

Optionally, the request message may further include an operation type, and the operation type may be a modification operation defined by the Restconf protocol, or an acquisition operation defined by the Netconf protocol. The modification operation may be a Patch operation or a Post operation defined by the Restconf protocol, and the acquisition operation may be a get operation defined by the Netconf protocol.

Optionally, after the request message is generated, the management device increases the quantity of sent request messages.

Optionally, the request message includes a quantity element, an offset element, and a condition element, where the quantity element includes the quantity of list entries, the offset element includes the offset, and the condition element includes the identification information of the to-be-requested list. When the request message further includes the first parameter type and the retrieval condition, the condition element further includes the first parameter type and the retrieval condition.

For example, it is assumed that the quantity of list entries is 20 and the calculated offset is 0, the quantity element may be represented as <limit>20</limit>, where "limit" represents the quantity element, "<limit>" is a start label of the quantity element, and "</limit>" is an end label of the quantity element. The offset element may be represented as <offset>0</offset>, where "offset" represents the offset element, "<offset>" is a start label of the offset element, and "</offset>" is an end label of the offset element. The condition element may be represented as <where>/jukebox/library/artist/album[year>1990] </where>.

Optionally, the request message includes a sorting parameter element and a sorting manner element. The sorting parameter element includes the second parameter type, and the sorting manner element includes the sorting manner.

For example, it is assumed that the second parameter type is also "release time" and is represented by "year", and it is assumed that the sorting manner is "ascending", which means that the list entries are sorted in ascending order by release time, and is represented by "ascending". Therefore, the sorting parameter element may be represented as <sort-target>/jukebox /library/artist/album/year </sort-target>, where "sort-target" represents the sorting parameter element, "< sort-target>" is a start label of the sorting parameter element, and "</ sort-target>" is an end label of the sorting parameter element. The sorting manner element may be represented as <sort-by>ascending </sort-by>, where "sort-by" indicates the sorting manner element, "< sort-by>" is a start label of the sorting manner element, and "</sort-by>" is an end label of the sorting manner element.

Therefore, the request message may be represented as:

```
          <limit>20</limit>
          <offset>0</offset>
          <where>/jukebox/library/artist/album[year>1990] </where>
          <sort-target>/jukebox /library/artist/album/year </sort-target>
          <sort-by>ascending </sort-by>.
```

Optionally, the request message may be an RPC message based on the Netconf protocol, an RPC message based on the Restconf protocol, or an http message based on the Restconf protocol.

Step 205: The network device receives the request message, and obtains a list entry that is in the to-be-requested list identified by the identification information, that uses the offset as a start location, and that is indicated by the quantity of list entries.

In this step, the network device receives the request message, parses the request message to obtain the quantity of list entries, the offset, and the identification information, and obtains, based on the quantity of list entries and the offset, the list entry from the to-be-requested list corresponding to the identification information.

Optionally, when the request message further includes the operation type, the list entry is obtained from the to-be-requested list corresponding to the identification information based on the quantity of list entries and the offset through an operation corresponding to the operation type.

Optionally, when the request message further includes the first parameter type and the retrieval condition, the network device obtains, from the to-be-requested list corresponding to the identification information based on the quantity of list entries and the offset, a list entry whose first parameter corresponding to the first parameter type meets the retrieval condition.

Step 206: The network device sends a response message to the management device, where the response message includes the obtained list entry.

Optionally, when the request message further includes the second parameter type and the sorting manner, the network device sorts, in the sorting manner, each list entry based on a second parameter included in each of the obtained list entry. Correspondingly, the response message includes each sorted list entry.

For example, the request message received by the network device may be represented as follows:

```
<limit>20</limit>
          <offset>0</offset>
          <where>/jukebox/library/artist/album[year>1990] </where>
          <sort-target>/jukebox /library/artist/album/year </sort-target>
          <sort-by>ascending </sort-by>.
```

The network device parses the request message to parse out that the request message includes a quantity element "<limit>20</limit>", and reads a quantity of list entries 20 from the quantity element. The request message is parsed to obtain an offset element "<offset>0</offset>", and an offset read from the offset element is 0. The request message is parsed to obtain a condition element "<where>/jukebox/library/artist/album[year>1990] </where>". It is read from the condition element that identification information of the to-be-requested list "album" that is to be obtained is "/jukebox/library/artist/album", the first parameter type is "release time", and the retrieval condition is "release time is later than year 1990". The request message is parsed to obtain a sorting parameter element "<sort-target>/jukeboxlibrary/artist/album /year </sort-target>", and a second parameter type read from the sorting parameter element is also "release time". The request message is parsed to obtain a sorting manner element "<sort-by>ascending </sort-by>", and a sorting manner read from the sorting manner element is "ascending".

The network device obtains, based on the quantity of list entries 20 and the offset 0, the 1^{st} to 20^{th} list entries whose release time is later than year 1990 from the list "album" corresponding to the identification information "/jukebox/library/artist/album", performs sorting based on the release time included in each of the 20 list entries in an ascending manner, and sends a response message to the management device, where the response message includes the sorted 20 list entries.

The response message may be represented as:

```
          <data>
               <album>
                 <name>yesterday<name>
                 <year> 1995</year>
             <name>yesterday once more<name>
                 <year>1997</year>
                 //A total of 20 list entries are returned.
               <album>
          </data>.
```

In the foregoing response message, "<name>yesterday<name>" indicates an element including a song name "yesterday", and "<year>1995</year>" indicates an element including release time, where the release time 1995 is the release time of the song "yesterday", and the song name "yesterday" and the release time 1995 are content of a list entry. Meanings of other elements in the response message are the same as the foregoing meanings, and are not enumerated one by one.

Optionally, in a process for the management device to request the list entry, the network device further detects a total quantity of list entries included in the to-be-requested list in real time. When detecting that the total quantity of list entries included in the to-be-requested list changes, the network device re-obtains a total quantity of list entries included in the to-be-requested list, to obtain an updated total quantity of list entries, and sends a total quantity update message to the management device, where the total quantity update message includes the updated total quantity of list entries.

In the process for the management device to request the list entry, the total quantity of list entries included in the to-be-requested list may change. A change may include: The network device adds a new list entry to the to-be-requested list, or the network device deletes some list entries from the to-be-requested list.

Optionally, when sending the response message to the management device, the network device may obtain the total quantity of list entries in the to-be-requested list, and include the obtained total quantity of list entries in the response message.

Optionally, the total quantity response message may be an RPC message based on the Netconf protocol, an RPC message based on the Restconf protocol, or an http message based on the Restconf protocol.

Step 207: The management device receives the response message, and obtains the list entry from the response message.

The management device may store the obtained list entry into a hard disk. Alternatively, the management device displays the obtained list entry, and may delete the list entry or store the list entry into a hard disk after the displaying. The management device then frees up memory space occupied by the list entry.

Optionally, when the management device has calculated the total quantity of request times, the management device determines whether the quantity of sent request messages is less than the total quantity of request times after deleting the list entry or storing the list entry to the hard disk. If the quantity of sent request messages is less than the total quantity of request times, the management device re-executes the operations in steps 203 to 207, until the quantity of sent request messages reaches the total quantity of request times, and the process ends.

Optionally, it is assumed that the total quantity of request times is z. In other words, the management device sends z request messages to the network device at different time, and receives z response messages sent by the network device at different time. A quantity of list entries included in each of the first z-1 response messages is equal to the quantity of list entries, and a quantity of list entries included in the z^{th} response message is less than or equal to the quantity of list entries.

Optionally, when there are a plurality of lists that include a list entry whose first parameter meets the retrieval condition in the network device, the management device selects identification information of one list, and requests the list entry from the list corresponding to the identification information in z times according to steps 204 to 207. For the z^{th} response message received by the management device, even if a quantity of list entries included in the z^{th} response message is less than the total quantity of list entries, the z^{th} response message also includes only the list entry in the list corresponding to the identification information, and does not include a list entry in another list. After receiving the z^{th} response message, and storing the list entry in the z^{th} response message to the hard disk or deleting the list entry in the z^{th} response message, the management device may reselect identification information of one list, and then perform the foregoing procedure again.

Optionally, in the process for the management device to request the list entries in the to-be-requested list in a plurality of times, if the management device receives a total quantity update message sent by the network device, where the total quantity update message includes an updated total quantity of list entries, the management device recalculates the total quantity of request times based on the updated total quantity of list entries and the quantity of list entries. In other words, the management device updates a value of the total quantity of request times.

Optionally, if the response message sent by the network device each time includes a total quantity of list entries, the management device compares the total quantity of list entries in the response message with the stored total quantity of list entries. If it is compared that the two are different, the total quantity of list entries included in the to-be-requested list in the network device changes. The management device recalculates the total quantity of request times based on the updated total quantity of list entries included in the response message and the quantity of list entries, and updates the stored total quantity of list entries to the total quantity of list entries included in the response message.

Optionally, when the management device does not calculate the total quantity of request times, the management device determines whether the quantity of list entries included in the response message is less than the quantity of list entries. When the management device determines that the quantity of list entries included in the response message is 0 or less than the quantity of list entries, it indicates that all the list entries included in the to-be-requested list have been obtained from the network device or all list entries that are included in the to-be-requested list and whose first parameters meet the retrieval condition have been obtained from the network device, and the process ends.

In the case in which the management device does not calculate the total quantity of request times, to accurately determine that all the list entries included in the to-be-requested list have been obtained, even if the management device determines that the quantity of list entries included in the response message is less than the quantity of list entries, the management device further sends a request message to the network device once and receives a response message corresponding to the request message, and determines that all the list entries included in the to-be-requested list have been obtained only when the quantity of list entries included in the response message is 0. In this way, the request message sent by the management device last time and the response message received by the management device last time cause a waste of network resources.

To avoid the waste of resources, the management device may obtain the total quantity of list entries included in the to-be-requested list, determine the total quantity of request times based on the total quantity of list entries, and determine in time, based on the total quantity of request times, whether all the list entries in the to-be-requested list have been obtained. This prevents the management device from further sending a request message once after obtaining all the list entries in the to-be-requested list, thereby saving network resources.

In this embodiment of this application, the request message generated by the management device includes the quantity of list entries, the offset, and the identification information of the to-be-requested list, and the management device sends the request message to the network device. The network device receives the request message, obtains, based on the quantity of list entries and the offset in the request message, the list entry from the to-be-requested list identified by the identification information, where an obtained quantity of list entries is less than or equal to the quantity of list entries; and sends the response message including the obtained list entry to the management device. This ensures that the quantity of list entries obtained by the management device each time is less than or equal to the quantity of list entries, thereby preventing the management device from receiving a large quantity of list entries at a time, which causes the management device to crash. Because the quantity of list entries obtained each time is less than or equal to the quantity of list entries, a loading speed is also increased.

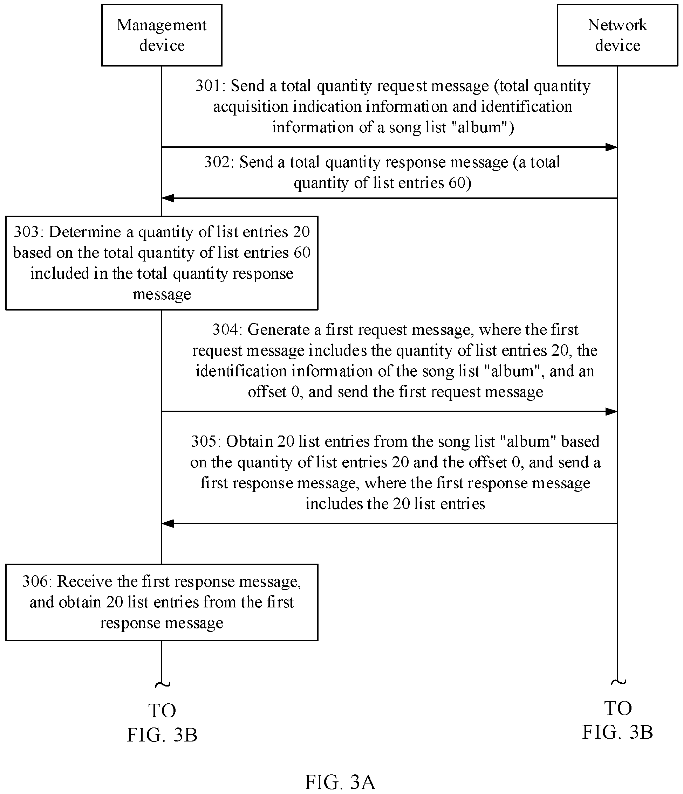

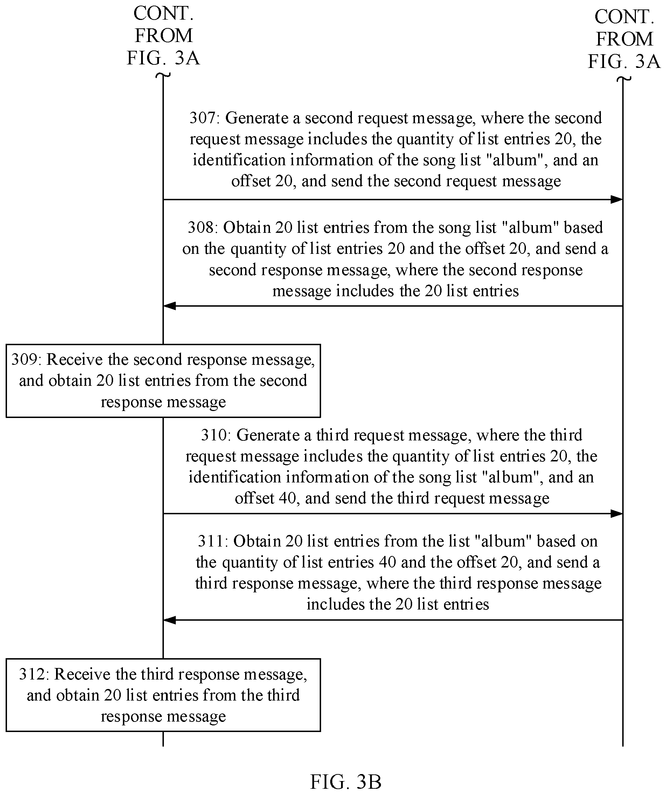

For the embodiment shown in FIG. 2, this application lists an example for detailed description. In this example, the management device and the network device may communicate based on the Netconf protocol or the Restconf protocol. In addition, in this example, the total quantity request message, the total quantity response message, the request message, and the response message may be RPC messages defined based on the Netconf protocol or the Restconf protocol. In this example, description is provided by using an example in which the to-be-requested list is the song list "album". Refer to FIG. 3A and FIG. 3B. A data processing method provided by the example includes the following steps.

Step 301: A management device sends a total quantity request message to a network device, where the total quantity request message includes total quantity acquisition indication information and identification information of a song list "album".

The total quantity request message may further include the total quantity acquisition indication information. In this step, the management device obtains identification information "jukebox/library/artist/album" of the song list "album", and generates an RPC message including the identification information "jukebox/library/artist/album" and the total quantity acquisition indication information, where the RPC message is used as the total quantity request message.

Optionally, the management device further obtains a first parameter type "release time" and a retrieval condition "release time is later than year 1990". The generated RPC message further includes the first parameter type "release time" and the retrieval condition "release time is later than year 1990". The generated RPC, namely, the generated total quantity request message, is as follows:

```
           <rpc netconf:message-id="101"
                 xmlns:netconf= "urn:ietf:params :xml:ns:netconf:base:1.0">
              <get-block>
               <subtree-filter>
                 <album xmlns="foo">
                 <return-count> TRUE</return-count>
          <where>/jukebox/library/artist/album[year> 1990] </where>
              </subtree-filter>
              </get-block>
          </rpc>.
```

In the RPC message, an indication element "<return-count>TRUE</return-count>" is used to include the total quantity acquisition indication information, and a condition element <where>/jukebox/library/artist/album[year>1990] </where> is used to include the identification information, the first parameter type "release time" ("year" is used to indicate "release time"), and the retrieval condition "release time is later than year 1990".

Step 302: The network device receives the total quantity request message, obtains, based on the total quantity request message, a total quantity of list entries included in the song list "album" (assuming that the total quantity of list entries is 60), and sends a total quantity response message to the management device, where the total quantity response message includes the total quantity of list entries 60.

In this step, the network device receives the total quantity request message, and parses the total quantity request message. The total quantity request message is parsed to obtain the indication element <return-count>true </return-count>. Based on content true included in the indication element, it is determined that the total quantity request message includes the total quantity acquisition indication information. In addition, the total quantity request message is parsed to obtain the condition element <where>/jukebox/library/artist/album[year>1990]</where>. It is obtained from the condition element that the identification information of the song list "album" is "jukebox/library/artist/album", the first parameter type is "release time", and the retrieval condition is "release time is later than year 1990".

Then, the network device obtains, based on the indication of the total quantity acquisition indication information, a total quantity of list entries whose release time is later than year 1990 from the song list "album" corresponding to the identification information "jukebox/library/artist/album". It is assumed that the obtained total quantity of list entries is 60. The network device generates an RPC message including a total quantity element, where the total quantity element includes the total quantity of list entries 60, and sends the RPC message as the total quantity response message to the management device.

The total quantity element may be represented as < count>60</ count>, and the total quantity response message may be represented as:

```
          <rpc-reply message-id=" 101"
                  xmlns:netconf="urn:ietf:params:xml:ns:netconf:base:1.0">
              <count>60</count>
          </rpc-reply>.
```

Step 303: The management device receives the total quantity response message, and determines a quantity of list entries 20 based on the total quantity of list entries 60 included in the total quantity response message.

In this step, the management device displays the total quantity of list entries 60, so that a user may enter a quantity of list entries based on the total quantity of list entries 60 (assuming that the entered quantity of list entries is 20), and the management device obtains the entered quantity of list entries 20.

Optionally, the management device determines that the total quantity of request times is 3 based on the total quantity of list entries 60 and the quantity of list entries 20.

Step 304: The management device generates a first request message, where the first request message includes the quantity of list entries 20, the identification information of the song list "album", and an offset 0, and sends the first request message to the network device.

The first request message is a request message generated by the management device for the first time. At this time, a quantity of sent request messages is 0.

In this step, the management device calculates that the offset is 0 based on the quantity of sent request messages 0 and the quantity of list entries 20. In addition, the management device obtains a second parameter type "release time" and a sorting manner "ascending" that are entered by the user, and generates the first request message. The first request message includes the quantity of list entries 20, the identification information "jukebox/library/artist/album" of the song list "album", the calculated offset "0", the first parameter type "release time", the retrieval condition "release time is later than year 1990", the second parameter type "release time", and the sorting manner "ascending" (indicated by "ascending").

The first request message generated by the management device may be represented as follows:

```
          <rpc netconf:message-id="101"
                  xmlns:netconf= "urn:ietf:params:xml:ns:netconf:base:1.0">
              <get-block>
               <subtree-filter>
                 <album xmlns="foo">
                 <limit>20</limit>
                 <offset>0</offset>
          <where>/jukebox/library/artist/album[year>1990] </where>
          <sort-target>/jukebox/library/artist/album/year</sort-target>
          <sort-by>ascending</sort-by>
              </subtree-filter>
              </get-block>
          </rpc>.
```

After sending the first request message, the management device increases the quantity of sent request messages. An increased quantity of sent request messages is 1.

Step 305: The network device receives the first request message, obtains 20 list entries from the song list "album" based on the quantity of list entries 20 and the offset 0, and sends a first response message to the management device, where the first response message includes the 20 list entries.

In this step, the network device receives the first request message, parses the first request message, and when the quantity of list entries 20 is parsed out from the first request message, determines that the management device uses a manner of obtaining data by page. The first request message is further parsed to obtain the offset 0, the identification information "/jukebox/library/artist/album" of the song list "album", the first parameter type "release time", the retrieval condition "release time is later than year 1990", the second parameter "release time", and the sorting manner "ascending".

The network device obtains, based on the quantity of list entries 20 and the offset 0, the 1^{st} to 20^{th} list entries whose release time is later than year 1990 from the song list "album" corresponding to the identification information "/jukebox/library/artist/album". The network device sorts the 20 list entries in an ascending manner based on the release time included in each of the 20 list entries. The network device generates an RPC message including the sorted 20 list entries, and sends the RPC message as the first response message to the management device.

The first response message may be represented as:

```
          <rpc-reply message-id=" 101"
                  xmlns:netconf="urn:ietf:params:xml:ns:netconf:base: 1.0">
              <data>
               <album>
                 <name>foo fighters<name> <year>1995</year>//One list entry
             <name>the color and the shape<name> <year>1997</year>//One list entry
                   //A total of 20 list entries are returned.
          <album>
          </data>
          </rpc-reply>.
```

Step 306: The management device receives the first response message, and obtains 20 list entries from the first response message.

The management device may store the obtained 20 list entries into a hard disk. The management device determines that the quantity of sent request messages 1 is less than the total quantity of request times 3, and continues to perform an operation in the following step 307.

Step 307: The management device generates a second request message, where the second request message includes the quantity of list entries 20, the identification information of the song list "album", and an offset 20; and sends the second request message to the network device.

The second request message is a request message generated by the management device for the second time. At this time, the quantity of sent request messages is 1.

In this step, the management device calculates that the offset is 20 based on the quantity of sent request messages 1 and the quantity of list entries 20, and generates the second request message. The second request message includes the quantity of list entries 20, the identification information "jukebox/library/artist/album" of the song list "album", the calculated offset "20", the first parameter type "release time", the retrieval condition "release time is later than year 1990", the second parameter type "release time", and the sorting manner "ascending".

The second request message generated by the management device may be represented as follows:

```
          <rpc netconf:message-id="101"
                  xmlns:netconf= "urn:ietf:params:xml:ns:netconf:base:1.0">
              <get-block>
               <subtree-filter>
                 <album xmlns="foo">
                 <limit>20</limit>
                 <offset>20</offset>
          <where>/jukebox/library/artist/album[year> 1990] </where>
          <sort-target>/jukebox/library/artist/album/year</sort-target>
          <sort-by>ascending</sort-by>
              </subtree-filter>
              </get-block>
          </rpc>.
```

After sending the second request message, the management device increases the quantity of sent request messages. An increased quantity of generated request messages is 2.

Step 308: The network device receives the second request message, obtains 20 list entries from the song list "album" based on the quantity of list entries 20 and the offset 20, and sends a second response message to the management device, where the second response message includes the 20 list entries.

In this step, the network device receives the second request message, parses the second request message, and when the quantity of list entries 20 is parsed out from the second request message, determines that the management device uses the manner of obtaining data by page. The second request message is further parsed to obtain the offset 20, the identification information "/jukebox/library/artist/album" of the song list "album", the first parameter type "release time", the retrieval condition "release time is later than year 1990", the second parameter "release time", and the sorting manner "ascending".

The network device obtains, based on the quantity of list entries 20 and the offset 20, the 21^{st} to 40^{th} list entries (a total of 20 list entries) whose release time is later than year 1990 from the song list "album" corresponding to the identification information "/jukebox/library/artist/album". The network device sorts the 20 list entries in an ascending manner based on the release time included in each of the 20 list entries. The network device generates an RPC message including the sorted 20 list entries, and sends the RPC message as the second response message to the management device.

The second response message may be represented as:

```
          <data>
               <album>
                 <name>yesterday<name> <year>1995</year>//One list entry
           <name>yesterday once more<name> <year>1997</year>//One list entry
                  //A total of 20 list entries are returned.
          <album>
          </data>.
```

Step 309: The management device receives the second response message, and obtains 20 list entries from the second response message.

The management device may store the obtained 20 list entries into the hard disk. The management device determines that the quantity of sent request messages 2 is less than the total quantity of request times 3, and continues to perform an operation in the following step 310.

Step 310: The management device generates a third request message, where the third request message includes the quantity of list entries 20, the identification information of the song list "album", and an offset 40, and sends the third request message to the network device.

The third request message is a request message generated by the management device for the third time. At this time, the quantity of sent request messages is 2.

In this step, the management device calculates that the offset is 40 based on the quantity of sent request messages 2 and the quantity of list entries 20, and generates the third request message. The third request message includes the quantity of list entries 20, the identification information "jukebox/library/artist/album" of the song list "album", the calculated offset "40", the first parameter type "release time", the retrieval condition "release time is later than year 1990", the second parameter type "release time", and the sorting manner "ascending".

The third request message generated by the management device may be represented as follows:

```
          <rpc netconf:message-id="101"
                  xmlns:netconf= "urn:ietf:params:xml:ns:netconf:base:1.0">
              <get-block>
               <subtree-filter>
                 <album xmlns="foo">
                 <limit>20</limit>
                 <offset>40</offset>
          <where>/jukebox/library/artist/album[year>1990] </where>
          <sort-target>/jukebox/library/artist/album/year</sort-target>
          <sort-by>ascending</sort-by>
              </subtree-filter>
              </get-block>
          </rpc>.
```

After sending the third request message, the management device increases the quantity of sent request messages. An increased quantity of sent request messages is 3.

Step 311: The network device receives the third request message, obtains 20 list entries from the song list "album" based on the quantity of list entries 40 and the offset 20, and sends a third response message to the management device, where the third response message includes the 20 list entries.

In this step, the network device receives the third request message, parses the third request message, and when the quantity of list entries 20 is parsed out from the third request message, determines that the management device uses the manner of obtaining data by page. The third request message is further parsed to obtain the offset 40, the identification information "/jukebox/library/artist/album" of the song list "album", the first parameter type "release time", the retrieval condition "release time is later than year 1990", the second parameter "release time", and the sorting manner "ascending".

The network device obtains, based on the quantity of list entries 20 and the offset 40, the 41^{st} to 60^{th} list entries (also a total of 20 list entries) whose release time is later than year 1990 from the song list "album" corresponding to the identification information "/jukebox/library/artist/album". The network device sorts the 20 list entries in an ascending manner based on the release time included in each of the 20 list entries. The network device generates an RPC message including the sorted 20 list entries, and sends the RPC message as the third response message to the management device.

The third response message may be represented as:

```
          <rpc-reply message-id=" 101"
                  xmlns:netconf="urn:ietf:params:xml:ns:netconf:base:1.0">
              <data>
               <album>
                 <name>color<name> <year>1999</year>//One list entry
             <name>despatico<name> <year>2017</year>//One list entry
                   //A total of 20 list entries are returned.
          <album>
          </data>
          </rpc-reply>.
```

Step 312: The management device receives the third response message, and obtains 20 list entries from the third response message.

The management device may store the obtained 20 list entries into the hard disk. The management device determines that the quantity of sent request messages 3 is equal to the total quantity of request times 3, and the process ends.

In this embodiment of this application, each request message generated by the management device includes the quantity of list entries 20 and an offset that is calculated based on the quantity of sent request messages and the quantity of list entries 20. The network device obtains no more than 20 list entries from the song list each time based on the offset. In this way, the response message sent to the management device includes no more than 20 list entries. Therefore, the management device is prevented from receiving a large quantity of list entries at a time, causing the management device to crash.

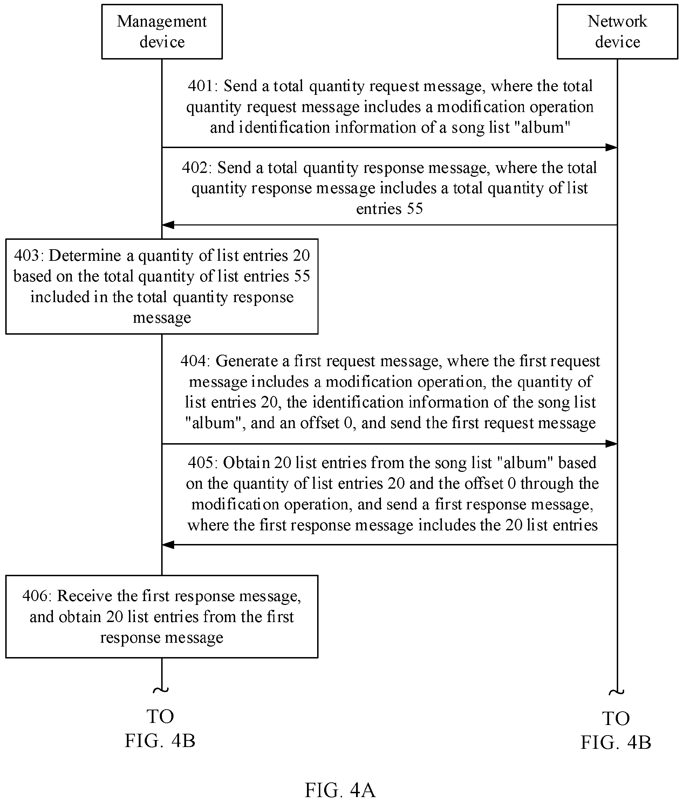

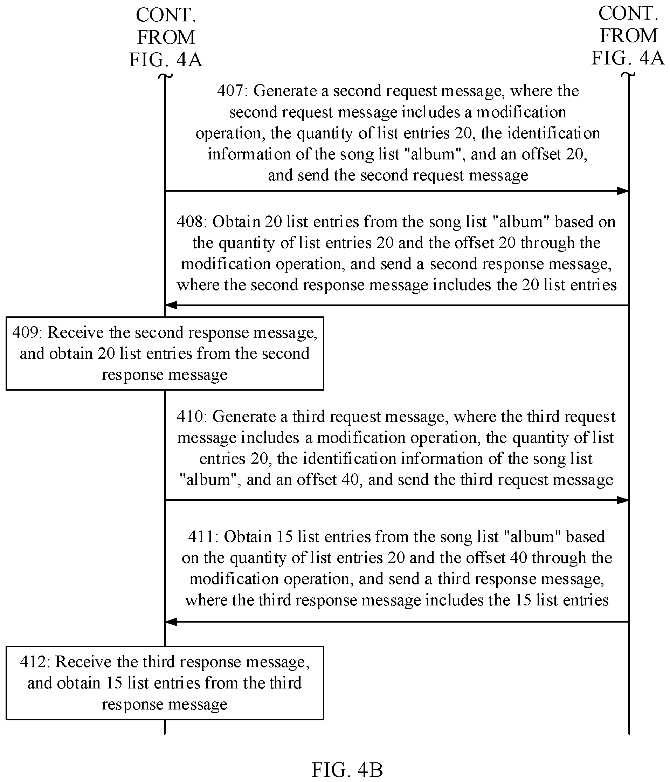

For the embodiment shown in FIG. 2, this application lists an example for detailed description. In this example, the management device and the network device may communicate based on the Restconf protocol. In addition, in this example, the request message generated by the management device may include an operation type, and the operation type is a modification operation. In this example, description is still provided by using an example in which the song list is the foregoing list "album". Refer to FIG. 4A and FIG. 4B. A data processing method provided by the example includes the following steps.

Step 401: A management device sends a total quantity request message to a network device, where the total quantity request message includes a modification operation and identification information of a song list "album".

The total quantity request message may further include the total quantity acquisition indication information. In this step, the management device obtains identification information "jukebox/library/artist/album" of the song list "album", and generates a message including the modification operation, the identification information "jukebox/library/artist/album", and the total quantity acquisition indication information, where the message is used as the total quantity request message.

Optionally, the total quantity request message is an http message, and the modification operation is a Patch operation or a Post operation defined by the Restconf protocol. In this embodiment of this application, description is provided by using an example in which the modification operation is a Patch operation. For an implementation of a Post operation, the implementation of the Post operation may be obtained only by replacing the Patch operation with the Post operation.

Optionally, the management device further obtains a first parameter type "release time" and a retrieval condition "release time is later than year 1990". The generated total quantity request message further includes the first parameter type "release time" and the retrieval condition "release time is later than year 1990". The generated total quantity request message may be represented as:

```
          PATCH /restconf/data/example-jukeboxjukebox/\
                 playlist=Foo-One HTTP/1.1
               Host: example.com
               Accept: application/yang-data+xml
               Content-Type: application/yang-collection+xml
              <subtree-filter>
               <album xmlns="foo">
               <return-count>TRUE </return-count>
          <where>/jukebox/library/artist/album[year>1990] </where>
              </subtree-filter>.
```

The total quantity request message includes a modification operation "Patch" defined by the Restconf protocol. In the RPC message, an indication element "<return-count>TRUE</return-count>" is used to include the total quantity acquisition indication information, and a condition element <where>/jukebox/library/artist/album[year>1990] </where> is used to include the first parameter type "release time" ("year" is used to indicate "release time") and the retrieval condition "release time is later than year 1990".

Step 402: The network device receives the total quantity request message, obtains, through the modification operation, a total quantity of list entries included in the song list "album" (assuming that the total quantity of list entries is 55), and sends a total quantity response message to the management device, where the total quantity response message includes the total quantity of list entries 55.

In this step, the network device receives the total quantity request message, and parses the total quantity request message. The total quantity request message is parsed to obtain the indication element <return-count>true </return-count>. Based on content true included in the indication element, it is determined that the total quantity request message includes the total quantity acquisition indication information. In addition, the total quantity request message is parsed to obtain the modification operation "Patch" and the condition element <where>/jukebox/library/artist/album[year>1990] </where>. It is obtained from the condition element that the identification information of the song list "album" is "jukebox/library/artist/album", the first parameter type is "release time", and the retrieval condition is "release time is later than year 1990".

Then, the network device obtains, based on the indication of the total quantity acquisition indication information, a total quantity of list entries whose release time is later than year 1990 from the song list "album" corresponding to the identification information "jukebox/library/artist/album" through the "Patch" operation. It is assumed that the obtained total quantity of list entries is 55. The network device generates an http message including a total quantity element, where the total quantity element includes the total quantity of list entries 55, and sends the http message as the total quantity response message to the management device.

The total quantity element may be represented as < count>55</count>, and the total quantity response message may be represented as:

```
          HTTP/1.1 200 OK
                 Date: Thu, 26 Jan 2017 20:56:30 GMT
                 Server: example-server
                 Last-Modified: Thu, 26 Jan 2017 20:56:30 GMT
                 Content-Type: application/yang-data+xml
                 <count>55</count>.
```

Step 403: The management device receives the total quantity response message, and determines a quantity of list entries 20 based on the total quantity of list entries 55 included in the total quantity response message.

In this step, the management device displays the total quantity of list entries 55, so that a user may enter a quantity of list entries based on the total quantity of list entries 55 (assuming that the entered quantity of list entries is 20), and the management device obtains the entered quantity of list entries 20.

Optionally, the management device determines that the total quantity of request times is 3 based on the total quantity of list entries 55 and the quantity of list entries 20.

Step 404: The management device generates a first request message, where the first request message includes a modification operation, the quantity of list entries 20, the identification information of the song list "album", and an offset 0, and sends the first request message to the network device.

The first request message is a request message generated by the management device for the first time. At this time, a quantity of sent request messages is 0.

In this step, the management device calculates that the offset is 0 based on the quantity of sent request messages 0 and the quantity of list entries 20. The management device obtains a second parameter type "release time" and a sorting manner "ascending" that are entered by the user, and generates the first request message. The first request message includes the modification operation "Patch", the quantity of list entries 20, the identification information "jukebox/library/artist/album" of the song list "album", the calculated offset "0", the first parameter type "release time", the retrieval condition "release time is later than year 1990", the second parameter type "release time", and the sorting manner "ascending".

The first request message generated by the management device may be represented as follows:

```
           PATCH /restconf/data/example-jukebox:jukeboxA
                  playlist=Foo-One HTTP/1.1
                 Host: example.com
                 Accept: application/yang-data+xml
                 Content-Type: application/yang-collection+xml
                <subtree-filter>
                 <album xmlns="foo">
                 <limit>20</limit>
                 <offset>0</offset>
          <where>/jukebox/library/artist/album[year>1990] </where>
          <sort-target>/jukebox/library/artist/album/year</sort-target>
          <sort-by>ascending</sort-by>
              </subtree-filter>
```

After sending the first request message, the management device increases the quantity of sent request messages. An increased quantity of sent request messages is 1.

Step 405: The network device receives the first request message, obtains 20 list entries from the song list "album" based on the quantity of list entries 20 and the offset 0 through the modification operation, and sends a first response message to the management device, where the first response message includes the 20 list entries.

In this step, the network device receives the first request message, parses the first request message, and when the quantity of list entries 20 is parsed out from the first request message, determines that the management device uses a manner of obtaining data by page. The first request message is further parsed to obtain the modification operation "Patch", the offset 0, the identification information "/jukebox/library/artist/album" of the song list "album", the first parameter type "release time", the retrieval condition "release time is later than year 1990", the second parameter "release time", and the sorting manner "ascending".

The network device obtains, based on the quantity of list entries 20 and the offset 0, the 1^{st} to 20^{th} list entries whose release time is later than year 1990 from the song list "album" corresponding to the identification information "/jukebox/library/artist/album" through the "Patch" operation. The network device sorts the 20 list entries in an ascending manner based on the release time included in each of the 20 list entries. The network device generates an http message including the sorted 20 list entries, and sends the http message as the first response message to the management device.

The first response message may be represented as:

```
          HTTP/1.1 200 OK
                 Date: Thu, 26 Jan 2017 20:56:30 GMT
                 Server: example-server
                 Last-Modified: Thu, 26 Jan 2017 20:56:30 GMT
                 Content-Type: application/yang-data+xml
              <data>
               <album>
                 <name>foo fighters<name> <year>1995</year>//One list entry
           <name>the color and the shape<name> <year>1997</year>//One list entry
                //A total of 20 list entries are returned.
               <album>
          </data>.
```

Step 406: The management device receives the first response message, and obtains 20 list entries from the first response message.

The management device may store the obtained 20 list entries into a hard disk. The management device determines that the quantity of sent request messages 1 is less than the total quantity of request times 3, and continues to perform an operation in the following step 407.

Step 407: The management device generates a second request message, where the second request message includes a modification operation, the quantity of list entries 20, the identification information of the song list "album", and an offset 20, and sends the second request message to the network device.

The second request message is a request message generated by the management device for the second time. At this time, the quantity of sent request messages is 1.

In this step, the management device calculates that the offset is 20 based on the quantity of sent request messages 1 and the quantity of list entries 20, and generates the second request message. The second request message includes the modification operation "Patch", the quantity of list entries 20, the identification information "jukebox/library/artist/album" of the song list "album", the calculated offset "20", the first parameter type "release time", the retrieval condition "release time is later than year 1990", the second parameter type "release time", and the sorting manner "ascending".

The second request message generated by the management device may be represented as follows:

```
           PATCH /restconf/data/example-jukebox:jukebox/\
                  playlist=Foo-One HTTP/1.1
                 Host: example.com
                 Accept: application/yang-data+xml
                 Content-Type: application/yang-collection+xml
                <subtree-filter>
                 <album xmlns="foo">
                 <limit>20</limit>
                 <offset>20</offset>
          <where>/jukebox/library/artist/album[year>1990] </where>
          <sort-target>/jukebox/library/artist/album/year</sort-target>
          <sort-by>ascending</sort-by>
              </subtree-filter>
```

After sending the second request message, the management device increases the quantity of sent request messages. An increased quantity of sent request messages is 2.

Step 408: The network device receives the second request message, obtains 20 list entries from the song list "album" based on the quantity of list entries 20 and the offset 20 through the modification operation, and sends a second response message to the management device, where the second response message includes the 20 list entries.

In this step, the network device receives the second request message, parses the second request message, and when the quantity of list entries 20 is parsed out from the second request message, determines that the management device uses the manner of obtaining data by page. The second request message is further parsed to obtain the modification operation "Patch", the offset 20, the identification information "/jukebox/library/artist/album" of the song list "album", the first parameter type "release time", the retrieval condition "release time is later than year 1990", the second parameter "release time", and the sorting manner "ascending".

The network device obtains, based on the quantity of list entries 20 and the offset 20, the 21^{st} to 40^{th} list entries whose release time is later than year 1990 from the song list "album" corresponding to the identification information "/jukebox/library/artist/album" through the "Patch" operation, to obtain 20 list entries. The network device sorts the 20 list entries in an ascending manner based on the release time included in each of the 20 list entries. The network device generates an http message including the sorted 20 list entries, and sends the http message as the second response message to the management device.

The second response message may be represented as:

```
          HTTP/1.1 200 OK
                 Date: Thu, 26 Jan 2017 20:56:30 GMT
                 Server: example-server
                 Last-Modified: Thu, 26 Jan 2017 20:56:30 GMT
                 Content-Type: application/yang-data+xml
              <data>
               <album>
                 <name>yesterday<name> <year>1995</year>//One list entry
           <name>yesterday once more<name> <year>1997</year>//One list entry
                //A total of 20 list entries are returned.
               <album>
          </data>.
```

Step 409: The management device receives the second response message, and obtains 20 list entries from the second response message.

The management device may store the obtained 20 list entries into the hard disk. The management device determines that the quantity of sent request messages 2 is less than the total quantity of request times 3, and continues to perform an operation in the following step 410.

Step 410: The management device generates a third request message, where the third request message includes a modification operation, the quantity of list entries 20, the identification information of the song list "album", and an offset 40, and sends the third request message to the network device.

The third request message is a request message generated by the management device for the third time. At this time, the quantity of sent request messages is 2.

In this step, the management device calculates that the offset is 40 based on the quantity of sent request messages 2 and the quantity of list entries 20, and generates the third request message. The third request message includes the modification operation "Patch", the quantity of list entries 20, the identification information "jukebox/library/artist/album" of the song list "album", the calculated offset "40", the first parameter type "release time", the retrieval condition "release time is later than year 1990", the second parameter type "release time", and the sorting manner "ascending".

The third request message generated by the management device may be represented as follows:

```
          PATCH /restconf/data/example-jukeboxjukebox/\
                  playlist=Foo-One HTTP/1.1
               Host: example.com
               Accept: application/yang-data+xml
               Content-Type: application/yang-collection+xml
               <subtree-filter>
               <album xmlns="foo">
               <limit>20</limit>
               <offset>40</offset>
          <where>/jukebox/library/artist/album[year>1990] </where>
          <sort-target>/jukebox/library/artist/album/year</sort-target>
          <sort-by>ascending</sort-by>
              </subtree-filter>.
```

After sending the third request message, the management device increases the quantity of sent request messages. An increased quantity of sent request messages is 1.

Step 411: The network device receives the third request message, obtains 20 list entries from the song list "album" based on the quantity of list entries 20 and the offset 40 through the modification operation, and sends a third response message to the management device, where the third response message includes the 20 list entries.

In this step, the network device receives the third request message, parses the third request message, and when the quantity of list entries 20 is parsed out from the third request message, determines that the management device uses the manner of obtaining data by page. The third request message is further parsed to obtain the modification operation "Patch", the offset 40, the identification information "/jukebox/library/artist/album" of the song list "album", the first parameter type "release time", the retrieval condition "release time is later than year 1990", the second parameter "release time", and the sorting manner "ascending".

The network device obtains, based on the quantity of list entries 20 and the offset 40, the 41^{st} to 55^{th} list entries whose release time is later than year 1990 from the song list "album" corresponding to the identification information "/jukebox/library/artist/album" through the "Patch" operation, to obtain 15 list entries. The network device sorts the 15 list entries in an ascending manner based on the release time included in each of the 15 list entries. The network device generates an http message including the sorted 15 list entries, and sends the http message as the third response message to the management device.

The third response message may be represented as:

```
          HTTP/1.1 200 OK
                 Date: Thu, 26 Jan 2017 20:56:30 GMT
                 Server: example-server
                 Last-Modified: Thu, 26 Jan 2017 20:56:30 GMT
                 Content-Type: application/yang-data+xml
              <data>
               <album>
                 <name>color<name> <year>1999</year>//One list entry
           <name>despatico<name> <year>2017</year>//One list entry
                //A total of 15 list entries are returned.
               <album>
          </data>.
```

Step 412: The management device receives the third response message, and obtains 15 list entries from the third response message.

The management device may store the obtained 15 list entries into the hard disk. The management device determines that the quantity of sent request messages 3 is equal to the total quantity of request times 3, and the process ends.

In this embodiment of this application, each request message generated by the management device includes the modification operation and the quantity of list entries 20. The network device obtains no more than 20 list entries from the song list each time through the modification operation. In this way, the response message sent to the management device includes no more than 20 list entries. Therefore, the management device is prevented from receiving a large quantity of list entries at a time, causing the management device to crash.

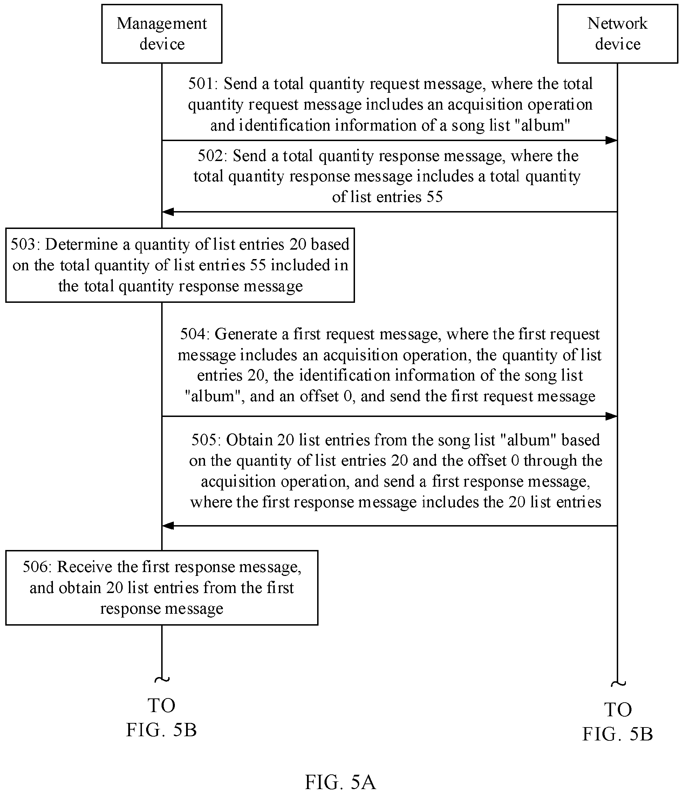

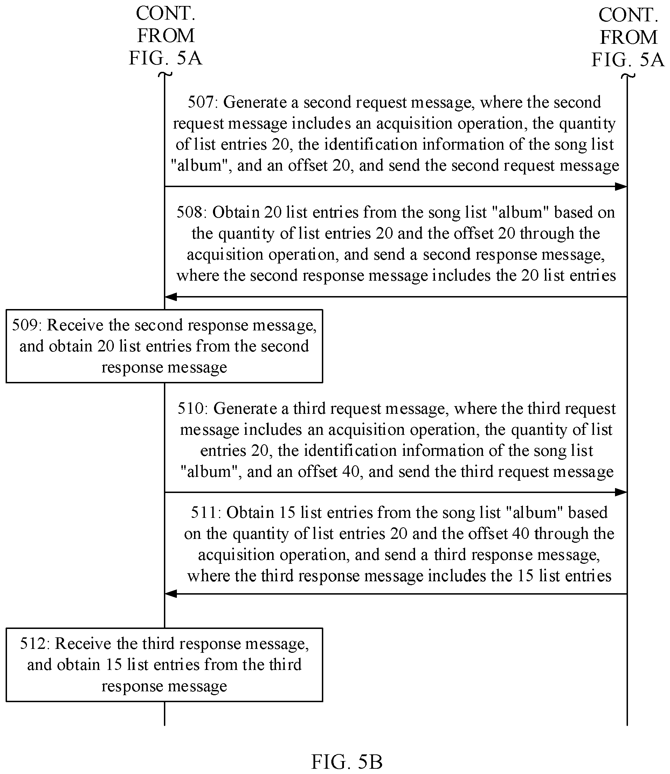

For the embodiment shown in FIG. 2, this application lists an example for detailed description. In this example, the management device and the network device may communicate based on the Netconf protocol. In addition, in this example, the request message generated by the management device may include an operation type, and the operation type is an acquisition operation. In this example, description is provided by using an example in which the to-be-requested list is the song list "album". Refer to FIG. 5A and FIG. 5B. A data processing method provided by the example includes the following steps.

Step 501: A management device sends a total quantity request message to a network device, where the total quantity request message includes an acquisition operation and identification information of a list "album".

The total quantity request message may further include the total quantity acquisition indication information. In this step, the management device obtains identification information "jukebox/library/artist/album" of the song list "album", and generates a message including the acquisition operation, the identification information "jukebox/library/artist/album", and the total quantity acquisition indication information, where the message is used as the total quantity request message.

Optionally, the total quantity request message is an RPC message, and the modification operation is a get operation defined by the Netconf protocol.

Optionally, the management device further obtains a first parameter type "release time" and a retrieval condition "release time is later than year 1990". The generated total quantity request message further includes the first parameter type "release time" and the retrieval condition "release time is later than year 1990". The generated total quantity request message may be represented as:

```
          <rpc netconf:message-id="101"
                  xmlns:netconf= "urn:ietf:params:xml:ns:netconf:base:1.0"
          where=/jukebox/library/artist/album[year>1990]
          return=true>
              <get>
               <subtree-filter>
                 <album xmlns="foo">
              </subtree-filter>
              </get >
          </rpc>.
```

Step 502: The network device receives the total quantity request message, obtains, through the acquisition operation, a total quantity of list entries included in the song list "album" (assuming that the total quantity of list entries is 55), and sends a total quantity response message to the management device, where the total quantity response message includes the total quantity of list entries 55.

In this step, the network device receives the total quantity request message, and parses the total quantity request message. The total quantity request message is parsed to obtain the total quantity acquisition indication information. In addition, the total quantity request message is parsed to obtain the acquisition operation "get", the identification information "jukebox/library/artist/album" of the song list "album", the first parameter type "release time", and the retrieval condition "release time is later than year 1990".

Then, the network device obtains, based on the indication of the total quantity acquisition indication information, a total quantity of list entries whose release time is later than year 1990 from the song list "album" corresponding to the identification information "jukebox/library/artist/album" through the "get" operation. It is assumed that the obtained total quantity of list entries is 55. The network device generates an RPC message including a total quantity element, where the total quantity element includes the total quantity of list entries 55, and sends the RPC message as the total quantity response message to the management device.

The total quantity element may be represented as < count>55</count>, and the total quantity response message may be represented as:

```
          <rpc-reply message-id=" 101"
                 xmlns:netconf="urn:ietf:params:xml:ns:netconf:base:1.0">
              <count>100</count>
          <rpc-reply>.
```

Step 503: The management device receives the total quantity response message, and determines a quantity of list entries 20 based on the total quantity of list entries 55 included in the total quantity response message.

In this step, the management device displays the total quantity of list entries 55, so that a user may enter a quantity of list entries based on the total quantity of list entries 55 (assuming that the entered quantity of list entries is 20), and the management device obtains the entered quantity of list entries 20.

Optionally, the management device determines that the total quantity of request times is 3 based on the total quantity of list entries 55 and the quantity of list entries 20.

Step 504: The management device generates a first request message, where the first request message includes an acquisition operation, the quantity of list entries 20, the identification information of the song list "album", and an offset 0, and sends the first request message to the network device.

The first request message is a request message generated by the management device for the first time. At this time, a quantity of sent request messages is 0.

In this step, the management device calculates that the offset is 0 based on the quantity of sent request messages 0 and the quantity of list entries 20. The management device obtains a second parameter type "release time" and a sorting manner "ascending" that are entered by the user, and generates the first request message. The first request message includes the acquisition operation "get", the quantity of list entries 20, the identification information "jukebox/library/artist/album" of the song list "album", the calculated offset "0", the first parameter type "release time", the retrieval condition "release time is later than year 1990", the second parameter type "release time", and the sorting manner "ascending".

The first request message generated by the management device may be represented as follows:

```
           <rpc netconf:message-id="101"
                 xmlns:netconf= "urn:ietf:params:xml:ns:netconf:base:1.0"
          where=/jukebox/library/artist/album[year>1990]
          return=true
          limit=20
          sort-target=/jukebox/library/artist/album/year
          sort-by=ascending>
              <get>
               <subtree-filter>
                 <album xmlns="foo">
              </subtree-filter>
              </get >.
```

After sending the first request message, the management device increases the quantity of sent request messages. An increased quantity of sent request messages is 1.

Step 505: The network device receives the first request message, obtains 20 list entries from the song list "album" based on the quantity of list entries 20 and the offset 0 through the acquisition operation, and sends a first response message to the management device, where the first response message includes the 20 list entries.

In this step, the network device receives the first request message, parses the first request message, and when the quantity of list entries 20 is parsed out from the first request message, determines that the management device uses a manner of obtaining data by page. The first request message is further parsed to obtain the acquisition operation "get", the offset 0, the identification information "/jukebox/library/artist/album" of the song list "album", the first parameter type "release time", the retrieval condition "release time is later than year 1990", the second parameter "release time", and the sorting manner "ascending".

The network device obtains, based on the quantity of list entries 20 and the offset 0, the 1^{st} to 20^{th} list entries from the song list "album" corresponding to the identification information "/jukebox/library/artist/album" through the "get" operation. The network device sorts the 20 list entries in an ascending manner based on the release time included in each of the 20 list entries. The network device generates an RPC message including the sorted 20 list entries, and sends the RPC message as the first response message to the management device.

The first response message may be represented as:

```
          <rpc-reply message-id=" 101"
                 xmlns:netconf="um:ietf:params:xml:ns:netconf:base:1.0">
              <data>
               <album>
                 <name>foo fighters<name> <year>1995</year>//One list entry
            <name>the color and the shape<name> <year>1997</year>//One list entry
                 //A total of 20 list entries are returned.
                <album>
          </data>
          </rpc-reply>.
```

Step 506: The management device receives the first response message, and obtains 20 list entries from the first response message.

The management device may store the obtained 20 list entries into the hard disk. The management device determines that the quantity of sent request messages 1 is less than the total quantity of request times 3, and continues to perform an operation in the following step 507.

Step 507: The management device generates a second request message, where the second request message includes an acquisition operation, the quantity of list entries 20, the identification information of the song list "album", and an offset 20, and sends the second request message to the network device.

The second request message is a request message generated by the management device for the second time. At this time, the quantity of sent request messages is 1.

In this step, the management device calculates that the offset is 20 based on the quantity of sent request messages 1 and the quantity of list entries 20, and generates the second request message. The second request message includes the acquisition operation "get", the quantity of list entries 20, the identification information "jukebox/library/artist/album" of the song list "album", the calculated offset "20", the first parameter type "release time", the retrieval condition "release time is later than year 1990", the second parameter type "release time", and the sorting manner "ascending".

The second request message generated by the management device may be represented as follows:

```
          <rpc netconf:message-id="101"
                 xmlns:netconf="urn:ietf:params:xml:ns:netconf:base:1.0"
          where=/jukebox/library/artistalbum[year>1990]
          return=true
          limit=20
          offset=20
          sort-target=/jukebox/library/artist/album/year
          sort-by=ascending>
              <get>
               <subtree-filter>
                 <album xmlns="foo">
              </subtree-filter>
              </get >
          </rpc>.
```

After sending the second request message, the management device increases the quantity of sent request messages. An increased quantity of sent request messages is 2.

Step 508: The network device receives the second request message, obtains 20 list entries from the list "album" based on the quantity of list entries 20 and the offset 20 through the acquisition operation, and sends a second response message to the management device, where the second response message includes the 20 list entries.

In this step, the network device receives the second request message, parses the second request message, and when the quantity of list entries 20 is parsed out from the second request message, determines that the management device uses the manner of obtaining data by page. The second request message is further parsed to obtain the acquisition operation "get", the offset 20, the identification information "/jukebox/library/artist/album" of the song list "album", the first parameter type "release time", the retrieval condition "release time is later than year 1990", the second parameter "release time", and the sorting manner "ascending".

The network device obtains, based on the quantity of list entries 20 and the offset 20, the 21^{st} to 40^{th} list entries whose release time is later than year 1990 from the song list "album" corresponding to the identification information "/jukebox/library/artist/album" through the "Patch" operation, to obtain 20 list entries. The network device sorts the 20 list entries in an ascending manner based on the release time included in each of the 20 list entries. The network device generates an RPC message including the sorted 20 list entries, and sends the RPC message as the second response message to the management device.

The second response message may be represented as:

```
          <rpc-reply message-id=" 101"
                 xmlns:netconf="urn:ietf:params:xml:ns:netconf:base:1.0">
              <data>
               <album>
                 <name>yesterday<name> <year>1995</year>//One list entry
            <name>yesterday once more<name> <year>1997</year>//One list entry
                 //A total of 20 list entries are returned.
               <album>
          </data>
          </rpc-reply>.
```

Step 509: The management device receives the second response message, and obtains 20 list entries from the second response message.

The management device may store the obtained 20 list entries into the hard disk. The management device determines that the quantity of sent request messages 2 is less than the total quantity of request times 3, and continues to perform an operation in the following step 510.

Step 510: The management device generates a third request message, where the third request message includes a modification operation, the quantity of list entries 20, the identification information of the song list "album", and an offset 40, and sends the third request message to the network device.

The third request message is a request message generated by the management device for the third time. At this time, the quantity of sent request messages is 2.

In this step, the management device calculates that the offset is 40 based on the quantity of sent request messages 2 and the quantity of list entries 20, and generates the third request message. The third request message includes the acquisition operation "get", the quantity of list entries 20, the identification information "jukebox/library/artist/album" of the song list "album", the calculated offset "40", the first parameter type "release time", the retrieval condition "release time is later than year 1990", the second parameter type "release time", and the sorting manner "ascending".

The third request message generated by the management device may be represented as follows:

```
          <rpc netconf:message-id="101"
                 xmlns:netconf="urn:ietf:params:xml:ns:netconf:base:1.0"
          where=/jukebox/library/artist/album[year> 1990]
          return=true
          limit=20
          offset=40
          sort-target=/jukebox/library/artist/album/year
          sort-by=ascending>
              <get>
               <subtree-filter>
               <album xmlns="foo">
              </subtree-filter>
              </get >
          </rpc>.
```

After sending the third request message, the management device increases the quantity of sent request messages. An increased quantity of sent request messages is 1.

Step 511: The network device receives the third request message, obtains 20 list entries from the song list "album" based on the quantity of list entries 20 and the offset 40 through the acquisition operation, and sends a third response message to the management device, where the third response message includes the 20 list entries.

In this step, the network device receives the third request message, parses the third request message, and when the quantity of list entries 20 is parsed out from the third request message, determines that the management device uses the manner of obtaining data by page. The third request message is further parsed to obtain the acquisition operation "get", the offset 40, the identification information "/jukebox/library/artist/album" of the song list "album", the first parameter type "release time", the retrieval condition "release time is later than year 1990", the second parameter "release time", and the sorting manner "ascending".

The network device obtains, based on the quantity of list entries 20 and the offset 40, the 41^{st} to 55^{th} list entries whose release time is later than year 1990 from the song list "album" corresponding to the identification information "/jukebox/library/artist/album" through the "get" operation, to obtain 15 list entries. The network device sorts the 15 list entries in an ascending manner based on the release time included in each of the 15 list entries. The network device generates an RPC message including the sorted 15 list entries, and sends the RPC message as the third response message to the management device.

The third response message may be represented as:

```
          <rpc-reply message-id=" 101"
                 xmlns:netconf="urn:ietf:params:xml:ns:netconf:base:1.0">
              <data>
               <album>
                 <name>color<name> <year>1999</year>//One list entry
            <name>despatico<name> <year>2017</year>//One list entry
                 //A total of 15 list entries are returned.
               <album>
          </data>
          </rpc-reply>.
```

Step 512: The management device receives the third response message, and obtains 15 list entries from the third response message.

The management device may store the obtained 15 list entries into the hard disk. The management device determines that the quantity of sent request messages 3 is equal to the total quantity of request times 3, and the process ends.

In this embodiment of this application, each request message generated by the management device includes the acquisition operation and the quantity of list entries 20. The network device obtains no more than 20 list entries from the song list each time through the acquisition operation. In this way, the response message sent to the management device includes no more than 20 list entries. Therefore, the management device is prevented from receiving a large quantity of list entries at a time, causing the management device to crash.

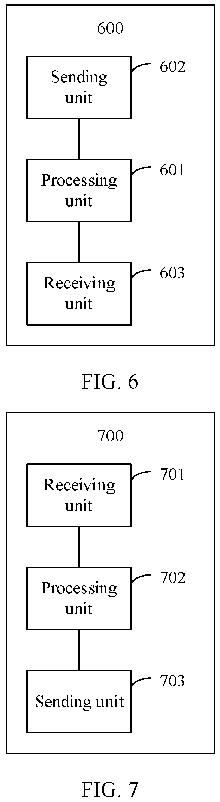

Refer to FIG. 6. An embodiment of this application provides a data processing apparatus 600. The apparatus 600 may be deployed on the management device in any of the foregoing embodiments, and includes:
a processing unit 601, configured to generate a request message, where the request message includes a quantity of list entries, identification information, and an offset, the quantity of list entries is used to indicate a quantity of list entries requested by the apparatus 600 from a network device, the identification information is used to indicate a to-be-requested list in the network device, the to-be-requested list includes a list entry indicated by the quantity of list entries, and a value of the offset is equal to a product of a quantity of request messages that have been sent to the network device and that are used to request a list entry in the to-be-requested list and the quantity of list entries;
a sending unit 602, configured to send the request message to the network device, where the request message is used to request, from the network device, a list entry that is in the to-be-requested list identified by the identification information, that uses the offset as a start location, and that is indicated by the quantity of list entries, and a total quantity of list entries included in the to-be-requested list is greater than the quantity of list entries; and
a receiving unit 603, configured to receive a response message that is corresponding to the request message and that is sent by the network device, where the response message includes the list entry requested by the request message.

Optionally, for a detailed implementation process for the processing unit 601 to generate the request message, refer to related content in step 204 of the embodiment shown in FIG. 2, steps 304, 307, and 310 of the embodiment shown in FIG. 3A and FIG. 3B, steps 404, 407, and 410 of the embodiment shown in FIG. 4A and FIG. 4B, and steps 504, 507, and 510 of the embodiment shown in FIG. 5A and FIG. 5B.

Optionally, the processing unit 601 is configured to:
obtain the total quantity of list entries, and determine a total quantity of request times based on the total quantity of list entries and the quantity of list entries, where the total quantity of request times is used to indicate a quantity of request messages sent by the apparatus 600 to the network device; and
generate the request message when a quantity of request messages that have been sent to the network device and that are used to request a list entry in the to-be-requested list does not reach the total quantity of request times.

Optionally, for a detailed implementation process for the processing unit 601 to obtain the total quantity of list entries, refer to related content in steps 201-203 of the embodiment shown in FIG. 2, steps 301-303 of the embodiment shown in FIG. 3A and FIG. 3B, steps 401-403 of the embodiment shown in FIG. 4A and FIG. 4B, and steps 501-503 of the embodiment shown in FIG. 5A and FIG. 5B.

Optionally, the sending unit 602 is further configured to send a total quantity request message to the network device, where the total quantity request message includes the identification information, and the total quantity request message is used to request the network device to obtain the total quantity of list entries.

The receiving unit 603 is further configured to receive a total quantity response message sent by the network device, where the total quantity response message includes the total quantity of list entries.

Optionally, the receiving unit 603 is further configured to receive a total quantity update message sent by the network device, where the total quantity update message includes an updated total quantity of list entries, and the updated total quantity of list entries is a total quantity of list entries determined by the network device based on a change of the total quantity of list entries.

The processing unit 601 is further configured to update a value of the total quantity of request times based on the updated total quantity of list entries.

Optionally, the request message is a network configuration protocol Netconf message or a Restconf protocol message.

In this embodiment of this application, the request message generated by the processing unit includes the quantity of list entries, the identification information, and the offset, where the quantity of list entries is used to indicate the quantity of list entries requested by the management device from the network device, the identification information is used to indicate the to-be-requested list in the network device, and the value of the offset is equal to the product of the quantity of request messages that have been sent to the network device and that are used to request the list entry in the to-be-requested list and the quantity of list entries. Therefore, after the sending unit sends the request message to the network device, the network device obtains the list entry that is in the to-be-requested list, that uses the offset as the start position, and that is indicated by the quantity of list entries. In this way, the quantity of list entries received by the receiving unit is less than or equal to the quantity of list entries, thereby preventing the management device from receiving a large quantity of list entries at a time and then crashing.

Refer to FIG. 7. An embodiment of this application provides a data processing apparatus 700. The apparatus 700 may be deployed on the network device in any of the foregoing embodiments, and includes:
a receiving unit 701, configured to receive a request message sent by a management device, where the request message includes a quantity of list entries, identification information, and an offset, the quantity of list entries is used to indicate a quantity of list entries requested by the management device from the apparatus 700, the identification information is used to indicate a to-be-requested list in the apparatus 700, the to-be-requested list includes a list entry indicated by the quantity of list entries, and a value of the offset is equal to a product of a quantity of request messages that have been sent to the apparatus 700 and that are used to request a list entry in the to-be-requested list and the quantity of list entries;
a processing unit 702, configured to obtain a list entry that is in the list identified by the identification information, that uses the offset as a start location, and that is indicated by the quantity of list entries, where a total quantity of list entries included in the list is greater than the quantity of list entries; and
a sending unit 703, configured to send a response message corresponding to the request message to the management device, where the response message includes the list entry.

Optionally, for a detailed implementation process for the processing unit 701 to obtain the list entry, refer to related content in step 205 of the embodiment shown in FIG. 2, steps 305, 308, and 311 of the embodiment shown in FIG. 3A and FIG. 3B, steps 405, 408, and 411 of the embodiment shown in FIG. 4A and FIG. 4B, and steps 505, 508, and 511 of the embodiment shown in FIG. 5A and FIG. 5B.

Optionally, the receiving unit 701 is further configured to receive a total quantity request message sent by the management device, where the total quantity request message includes the identification information.

The processing unit 702 is further configured to obtain a total quantity of list entries included in the list identified by the identification information.

The sending unit 703 is further configured to send a total quantity response message to the management device, where the total quantity response message includes the total quantity of list entries, the total quantity response message is used by the management device to determine a total quantity of request times based on the total quantity of list entries, and the total quantity of request times is used to indicate a quantity of request messages sent by the management device to the apparatus 700.

Optionally, for a detailed implementation process for the processing unit 701 to obtain the total quantity of list entries, refer to related content in step 202 of the embodiment shown in FIG. 2, step 302 of the embodiment shown in FIG. 3A and FIG. 3B, step 402 of the embodiment shown in FIG. 4A and FIG. 4B, and step 502 of the embodiment shown in FIG. 5A and FIG. 5B.

Optionally, the processing unit 702 is further configured to determine an updated total quantity of list entries when the total quantity of list entries changes.

The sending unit 703 is further configured to send a total quantity update message to the management device, where the total quantity update message includes the updated total quantity of list entries, and the total quantity update message is used by the management device to update a value of the total quantity of request times based on the updated total quantity of list entries.

In this embodiment of this application, because the request message received by the receiving unit includes the quantity of list entries, the identification information, and the offset, the processing unit obtains the list entry that is in the list identified by the identification information, that uses the offset as the start location, and that is indicated by the quantity of list entries. In this way, the quantity of list entries included in the response message of the sending unit is less than the quantity of list entries. This may reduce a quantity of list entries to be sent to the management device and prevent the management device from receiving a large quantity of list entries at a time and then crashing.

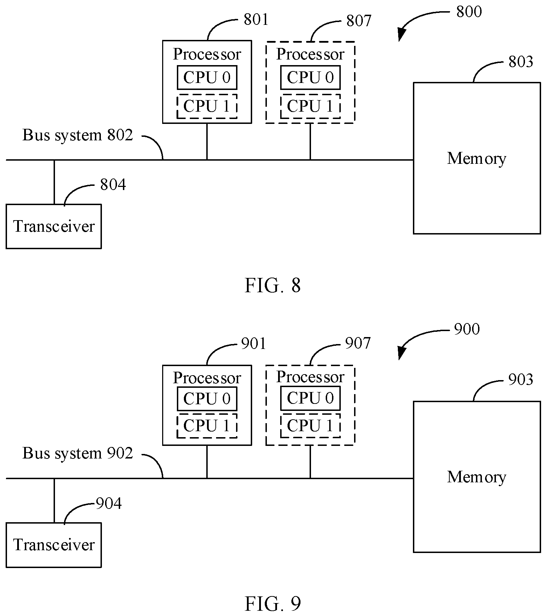

Refer to FIG. 8. An embodiment of this application provides a schematic diagram of a data processing apparatus 800. The apparatus 800 may be the management device in any one of the foregoing embodiments. The apparatus 800 includes at least one processor 801, a bus system 802, a memory 803, and at least one transceiver 804.

The apparatus 800 is an apparatus of a hardware structure, and may be configured to implement function modules in the apparatus 600 in FIG. 6. For example, a person skilled in the art may consider that the processing unit 601 in the apparatus 600 shown in FIG. 6 may be implemented by using the at least one processor 601 to invoke code in the memory 603, and the sending unit 602 and the receiving unit 603 in the apparatus 600 shown in FIG. 6 may be implemented by using the transceiver 604.

Optionally, the apparatus 800 may be configured to implement a function of the collection analysis device in any one of the foregoing embodiments.

Optionally, the processor 801 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions in this application.

The bus system 802 may include a path for transmitting information between the foregoing components.

The transceiver 804 is configured to communicate with another device or a communications network.

The memory 803 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, or the like), a magnetic disk storage medium or another magnetic storage device, or any other medium that can carry or store expected program code in a form of an instruction or a data structure and that can be accessed by a computer. However, the memory 803 is not limited thereto. The memory may exist independently, and is connected to the processor through a bus. The memory may alternatively be integrated with the processor.

The memory 803 is configured to store application code for executing the solutions in this application, and the application code is executed under control of the processor 501. The processor 801 is configured to execute the application code stored in the memory 803, to implement a function in the method in this patent.

During specific implementation, in an embodiment, the processor 801 may include one or more CPUs, for example, a CPU 0 and a CPU 1 in FIG. 8.

During specific implementation, in an embodiment, the apparatus 800 may include a plurality of processors, for example, the processor 801 and a processor 807 in FIG. 8. Each of the processors may be a single-core (single-CPU) processor or a multi-core (multi-CPU) processor. The processor herein may refer to one or more devices, circuits, and/or processing cores configured to process data (for example, computer program instructions).

Refer to FIG. 9. An embodiment of this application provides a schematic diagram of a data processing apparatus 900. The apparatus 900 may be the network device in any one of the foregoing embodiments, for example, a head node in the embodiment shown in FIG. 9. The apparatus 900 includes at least one processor 901, a bus system 902, a memory 903, and at least one transceiver 904.

The apparatus 900 is an apparatus of a hardware structure, and may be configured to implement function modules in the apparatus 700 in FIG. 7. For example, a person skilled in the art may consider that the processing unit 702 in the apparatus 700 shown in FIG. 7 may be implemented by using the at least one processor 701 to invoke code in the memory 703, and the receiving unit 701 and the sending unit 703 in the apparatus 700 shown in FIG. 7 may be implemented by using the transceiver 704.

Optionally, the apparatus 900 may be configured to implement a function of the collection analysis device in any one of the foregoing embodiments.

Optionally, the processor 901 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions in this application.

The bus system 902 may include a path for transmitting information between the foregoing components.

The transceiver 904 is configured to communicate with another device or a communications network.

The memory 903 may be a read-only memory (read-only memory, ROM) or another type of static storage device that can store static information and instructions, a random access memory (random access memory, RAM) or another type of dynamic storage device that can store information and instructions; an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, or the like), a magnetic disk storage medium or another magnetic storage device, or any other medium that can carry or store expected program code in a form of an instruction or data structure and that can be accessed by a computer. However, the memory 903 is not limited thereto. The memory may exist independently, and is connected to the processor through a bus. The memory may alternatively be integrated with the processor.

The memory 903 is configured to store application code for executing the solutions in this application, and the application code is executed under control of the processor 901. The processor 901 is configured to execute the application code stored in the memory 903, to implement a function in the method in the patent.

During specific implementation, in an embodiment, the processor 901 may include one or more CPUs, for example, a CPU 0 and a CPU 1 in FIG. 9.

During specific implementation, in an embodiment, the apparatus 900 may include a plurality of processors, for example, the processor 901 and a processor 907 in FIG. 9. Each of the processors may be a single-core (single-CPU) processor or a multi-core (multi-CPU) processor. The processor herein may refer to one or more devices, circuits, and/or processing cores configured to process data (for example, computer program instructions).

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, improvement, or the like made without departing from the principle of this application should fall within the protection scope of this application.

## Claims

1. A data processing method, wherein the method comprises:
generating, by a management device, a request message, wherein the request message comprises a quantity of list entries, identification information, and an offset, the quantity of list entries is used to indicate a quantity of list entries requested by the management device from a network device, the identification information is used to indicate a to-be-requested list in the network device, the to-be-requested list comprises a list entry indicated by the quantity of list entries, and a value of the offset is equal to a product of a quantity of request messages that have been sent to the network device and that are used to request a list entry in the to-be-requested list and the quantity of list entries;
sending, by the management device, the request message to the network device, wherein the request message is used to request, from the network device, a list entry that is in the list identified by the identification information, that uses the offset as a start location, and that is indicated by the quantity of list entries, and a total quantity of list entries comprised in the list is greater than the quantity of list entries; and
receiving, by the management device, a response message that is corresponding to the request message and that is sent by the network device, wherein the response message comprises the list entry requested by the request message.

2. The method according to claim 1, wherein before the generating, by a management device, a request message, the method further comprises:
obtaining, by the management device, the total quantity of list entries, and determining a total quantity of request times based on the total quantity of list entries and the quantity of list entries, wherein the total quantity of request times is used to indicate a quantity of request messages sent by the management device to the network device; and
the generating, by a management device, a request message comprises:
generating, by the management device, the request message when a quantity of request messages that have been sent to the network device and that are used to request a list entry in the to-be-requested list does not reach the total quantity of request times.

3. The method according to claim 2, wherein the obtaining, by the management device, the total quantity of list entries comprises:
sending, by the management device, a total quantity request message to the network device, wherein the total quantity request message comprises the identification information, and the total quantity request message is used to request the network device to obtain the total quantity of list entries; and
receiving, by the management device, a total quantity response message sent by the network device, wherein the total quantity response message comprises the total quantity of list entries.

4. The method according to claim 2, further comprising:
receiving, by the management device, a total quantity update message sent by the network device, wherein the total quantity update message comprises an updated total quantity of list entries, and the updated total quantity of list entries is a total quantity of list entries determined by the network device based on a change of the total quantity of list entries; and
updating, by the management device, a value of the total quantity of request times based on the updated total quantity of list entries.

5. The method according to any one of claims 1 to 4, wherein the request message is a request message based on a network configuration protocol Netconf or a request message based on a Restconf protocol.

6. A data processing method, wherein the method comprises:
receiving, by a network device, a request message sent by a management device, wherein the request message comprises a quantity of list entries, identification information, and an offset, the quantity of list entries is used to indicate a quantity of list entries requested by the management device from the network device, the identification information is used to indicate a to-be-requested list in the network device, the to-be-requested list comprises a list entry indicated by the quantity of list entries, and a value of the offset is equal to a product of a quantity of request messages that have been sent to the network device and that are used to request a list entry in the to-be-requested list and the quantity of list entries;
obtaining, by the network device, a list entry that is in the list identified by the identification information, that uses the offset as a start location, and that is indicated by the quantity of list entries, wherein a total quantity of list entries comprised in the list is greater than the quantity of list entries; and
sending, by the network device, a response message corresponding to the request message to the management device, wherein the response message comprises the list entry.

7. The method according to claim 6, wherein before the receiving, by a network device, a request message sent by a management device, the method further comprises:
receiving, by the network device, a total quantity request message sent by the management device, wherein the total quantity request message comprises the identification information;
obtaining, by the network device, a total quantity of list entries comprised in the list identified by the identification information; and
sending, by the network device, a total quantity response message to the management device, wherein the total quantity response message comprises the total quantity of list entries, the total quantity response message is used by the management device to determine a total quantity of request times based on the total quantity of list entries, and the total quantity of request times is used to indicate a quantity of request messages sent by the management device to the network device.

8. The method according to claim 7, wherein the method further comprises:
determining, by the network device when the total quantity of list entries changes, an updated total quantity of list entries, and sending a total quantity update message to the management device, wherein the total quantity update message comprises the updated total quantity of list entries, and the total quantity update message is used by the management device to update a value of the total quantity of request times based on the updated total quantity of list entries.

9. A data processing apparatus, wherein the apparatus comprises:
a processing unit, configured to generate a request message, wherein the request message comprises a quantity of list entries, identification information, and an offset, the quantity of list entries is used to indicate a quantity of list entries requested by the apparatus from a network device, the identification information is used to indicate a to-be-requested list in the network device, the to-be-requested list comprises a list entry indicated by the quantity of list entries, and a value of the offset is equal to a product of a quantity of request messages that have been sent to the network device and that are used to request a list entry in the to-be-requested list and the quantity of list entries;
a sending unit, configured to send the request message to the network device, wherein the request message is used to request, from the network device, a list entry that is in the list identified by the identification information, that uses the offset as a start location, and that is indicated by the quantity of list entries, and a total quantity of list entries comprised in the list is greater than the quantity of list entries; and
a receiving unit, configured to receive a response message that is corresponding to the request message and that is sent by the network device, wherein the response message comprises the list entry requested by the request message.

10. The apparatus according to claim 9, wherein the processing unit is configured to:
obtain the total quantity of list entries, and determine a total quantity of request times based on the total quantity of list entries and the quantity of list entries, wherein the total quantity of request times is used to indicate a quantity of request messages sent by the management device to the apparatus; and
generate the request message when a quantity of request messages that have been sent to the network device and that are used to request a list entry in the to-be-requested list does not reach the total quantity of request times.

11. The apparatus according to claim 10, wherein the sending unit is further configured to send a total quantity request message to the network device, wherein the total quantity request message comprises the identification information, and the total quantity request message is used to request the network device to obtain the total quantity of list entries; and
the receiving unit is further configured to receive a total quantity response message sent by the network device, wherein the total quantity response message comprises the total quantity of list entries.

12. The apparatus according to claim 10, wherein
the receiving unit is further configured to receive a total quantity update message sent by the network device, wherein the total quantity update message comprises an updated total quantity of list entries, and the updated total quantity of list entries is a total quantity of list entries determined by the network device based on a change of the total quantity of list entries; and
the processing unit is further configured to update a value of the total quantity of request times based on the updated total quantity of list entries.

13. The apparatus according to any one of claims 9 to 12, wherein the request message is a request message based on a network configuration protocol Netconf or a request message based on a Restconf protocol.

14. A data processing apparatus, wherein the apparatus comprises:
a receiving unit, configured to receive a request message sent by a management device, wherein the request message comprises a quantity of list entries, identification information, and an offset, the quantity of list entries is used to indicate a quantity of list entries requested by the management device from the apparatus, the identification information is used to indicate a to-be-requested list in the apparatus, the to-be-requested list comprises a list entry indicated by the quantity of list entries, and a value of the offset is equal to a product of a quantity of request messages that have been sent to the apparatus and that are used to request a list entry in the to-be-requested list and the quantity of list entries;
a processing unit, configured to obtain a list entry that is in the list identified by the identification information, that uses the offset as a start location, and that is indicated by the quantity of list entries, wherein a total quantity of list entries comprised in the list is greater than the quantity of list entries; and
a sending unit, configured to send a response message corresponding to the request message to the management device, wherein the response message comprises the list entry.

15. The apparatus according to claim 14, wherein
the receiving unit is further configured to receive a total quantity request message sent by the management device, wherein the total quantity request message comprises the identification information;
the processing unit is further configured to obtain the total quantity of list entries comprised in the list identified by the identification information; and
the sending unit is further configured to send a total quantity response message to the management device, wherein the total quantity response message comprises the total quantity of list entries, the total quantity response message is used by the management device to determine a total quantity of request times based on the total quantity of list entries, and the total quantity of request times is used to indicate a quantity of request messages sent by the management device to the apparatus.

16. The apparatus according to claim 15, wherein the processing unit is further configured to determine an updated total quantity of list entries when the total quantity of list entries changes; and
the sending unit is further configured to send a total quantity update message to the management device, wherein the total quantity update message comprises the updated total quantity of list entries, and the total quantity update message is used by the management device to update a value of the total quantity of request times based on the updated total quantity of list entries.

17. A data processing system, wherein the system comprises the apparatus according to any one of claims 9 to 13 and the apparatus according to any one of claims 14 to 16.
